# EUROPEAN PATENT APPLICATION

(11) **EP 4 443 929 A1**
(43) Date of publication of application: **09.10.2024**
(21) Application number: 23737398.0
(22) Date of filing: 05.01.2023
(51) Int. Cl.: H04W 12/30, H04W 12/069, H04W 84/10

(54) **METHOD AND DEVICE FOR FORMING END-TO-END SECURITY DURING PROVISIONING OF CREDENTIALS TO TERMINAL BY USING CONTROL PLANE**

(30) Priority: 05.01.2022 KR 20220001620
(71) Applicant: Samsung Electronics Co., Ltd, Suwon-si, Gyeonggi-do 16677 (KR)
(72) Inventor: CHOI, Hongjin, Suwon-si, Gyeonggi-do 16677 (KR); SON, Jungje, Suwon-si, Gyeonggi-do 16677 (KR); LEE, Duckey, Suwon-si, Gyeonggi-do 16677 (KR); LIM, Taehyung, Suwon-si, Gyeonggi-do 16677 (KR)
(74) Representative: Gulde & Partner
(86) International application number: PCT/KR2023/000202
(87) International publication number: WO 2023/132650

(57) **Abstract**

The present disclosure provides a method and a device by which a terminal is safely provisioned, from a PS, with credentials of an SO-SNPN to receive service when a non-public network is used in a wireless communication system. The method performed by a terminal in a wireless communication system may comprise the operations of: acquiring configuration information including a certificate of the terminal and a CA certificate associated with a certificate of a provisioning server; confirming that provisioning using a control plane is performed; generating a temporary key pair on the basis of the confirmation; and acquiring credentials of an SO-SNPN on the control plane on the basis of the configuration information and the temporary key pair.

## Description

### [Technical Field]

Various embodiments of the disclosure relate to a method and an apparatus for provisioning credential information of a terminal in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, 3GPP, which is in charge of cellular mobile communication standards, is standardizing a new core network architecture called 5G core (5GC) to evolve from existing 4G LTE systems to 5G systems.

Compared to an evolved packet core (EPC), which is a network core for existing 4G, 5GC supports the following differentiated functions.

First, in 5GC, a network slice function is introduced. As a requirement of 5G, 5GC should support various terminal types and services (e.g., eMBB, URLLC, or mMTC services). Different types of services have different requirements for the core network. For example, eMBB service requires a high data rate and URLLC service requires a high stability and a low latency. One of the technologies proposed to satisfy these various service requirements is network slicing.

Network slicing is a method of virtualizing one physical network to generate multiple logical networks, and each network slice instance (NSI) may have different characteristics. Accordingly, each NSI may satisfy various service requirements by having a network function (NF) suitable for its characteristics. When each terminal is assigned an NSI that matches the characteristics of service each terminal requires, various 5G services may be efficiently supported.

Second, 5GC may facilitate network virtualization paradigm support through separation of a mobility management function and a session management function. In 4G LTE, services could be provided through signaling exchange with a single core device called a mobility management entity (MME) responsible for registration, authentication, mobility management, and session management functions for all terminals. However, in 5G, as the number of terminals increases explosively and the mobility and traffic/session characteristics that should be supported according to the type of each terminal are segmented, if all functions are supported by a single device such as the MME, a decrease in the scalability of adding entities to each required function is inevitable. Accordingly, various functions are being developed based on the architecture in which a mobility management function and a session management function are separated in order to improve the scalability in terms of function/implementation complexity and signaling load of a core device in charge of a control plane.

### [Disclosure]

### [Technical Problem]

With the development of a mobile communication system, various services may be provided, and there is a need for efficient use of a mobile communication system, especially a non-public network (NPN). With regard to this need, various embodiments of the disclosure provide a method and an apparatus for enabling a terminal to receive desired services from a subscription owner-standalone non-public network (SO-SNPN) even if the terminal does not possess credential information (hereinafter referred to as `credential') of the SO-SNPN from which the terminal wishes to receive services.

Various embodiments of the disclosure provide an apparatus and a method for safely providing credentials of a UE from a provisioning server (PS) that manages the credentials, by using a control plane without exposing the credentials to entities other than the UE and the PS.

Various embodiments of the disclosure provide an apparatus and a method for enabling a UE to successfully complete access to an SO-SNPN from which the terminal wishes to receive service, based on credentials provided through a control plane.

### [Technical Solution]

A method performed by a terminal in a wireless communication system according to an embodiment of the disclosure may include acquiring configuration information including a certificate of the terminal and a certificate authority (CA) certificate associated with a certificate of a provisioning server, identifying that provisioning using a control plane is performed, generating an ephemeral key pair based on the identification, and acquiring credentials of a subscription owner-standalone non-public network (SO-SNPN) in the control plane, based on the configuration information and the ephemeral key pair.

A method performed by a provisioning server in a wireless communication system according to an embodiment of the disclosure may include acquiring configuration information including a certificate of the provisioning server and a certificate authority (CA) certificate associated with a certificate of a terminal, identifying that provisioning using a control plane is performed, generating an ephemeral key pair for the provisioning using the control plane, and generating, based on the configuration information and the ephemeral key pair, credentials of a subscription owner-standalone non-public network (SO-SNPN) to be transferred in the control plane.

A terminal in a wireless communication system according to an embodiment of the disclosure may include a transceiver, and a controller functionally connected to the transceiver, wherein the controller is configured to acquire configuration information including a certificate of the terminal and a certificate authority (CA) certificate associated with a certificate of a provisioning server, identify that the provisioning using a control plane is performed, generate an ephemeral key pair based on the identification, and acquire credentials of a subscription owner-standalone non-public network (SO-SNPN) in the control plane, based on the configuration information and the ephemeral key pair.

A provisioning server in a wireless communication system according to an embodiment of the disclosure may include a transceiver, and a controller functionally connected to the transceiver, wherein the controller is configured to acquire configuration information including a certificate of the provisioning server and a certificate authority (CA) certificate associated with a certificate of a terminal, identify that provisioning using a control plane is performed, generate an ephemeral key pair for the provisioning using the control plane, and generate, based on the configuration information and the ephemeral key pair, credentials of a subscription owner-standalone non-public network (SO-SNPN) to be transferred in the control plane.

The technical subjects pursued in the disclosure may not be limited to the above-mentioned technical subjects, and other technical subjects which are not mentioned may be clearly understood, through the following descriptions, by those skilled in the art to which the disclosure pertains.

### [Advantageous Effects]

According to various embodiments of the disclosure, the UE can safely receive credentials of SO-SNPN from a PS that possesses the SO-SNPN credentials in a state in which a UE does not have the SO-SNPN credentials, and effectively receive desired services from the SO-SNPN by using the corresponding credentials in a wireless communication system.

In addition, according to various embodiments of the disclosure, a function of a default credentials server (DCS) in an authentication process may be performed by an authentication server function (AUSF) of an onboarding - standalone non-public network (SNPN) (ON-SNPN), or may be performed by the DCS instead of the AUSF. In addition, during a UE parameters update (UPU) process, a unified data management (UDM) function may be performed by the DCS, the PS, or the UDM of the ON-SNPN. By using ephemeral public keys that can only be generated by the UE and PS, the credentials of SO-SNPN to be delivered by the PS can be protected and securely delivered to the UE so that they are unable to be viewed by entities other than the UE and PS.

Advantageous effects obtainable from the disclosure may not be limited to the above - mentioned effects, and other effects which are not mentioned may be clearly understood, through the following descriptions, by those skilled in the art to which the disclosure pertains.

### [Description of Drawings]

FIG. 1 illustrates the architecture of a 5G mobile communication network according to an embodiment of the disclosure;
FIG. 2 illustrates the architecture of a network for provisioning credentials of a UE according to an embodiment of the disclosure;
FIGS. 3A to 3C illustrate an example of a method in which a UE accesses an ON-SNPN, performs mutual authentication, and then receives provisioning of SO-SNPN credentials from a PS by using a user plane, according to an embodiment of the disclosure;
FIGS. 4A to 4E are flowcharts illustrating an example of a method in which a UE accesses an ON-SNPN, performs mutual authentication, and then securely receives provisioning of SO-SNPN credentials from a PS, according to an embodiment of the disclosure;
FIGS. 5A to 5E are flowcharts illustrating an example of a method in which a UE accesses an ON-SNPN, performs mutual authentication, and then securely receives provisioning of SO-SNPN credentials from a PS, according to an embodiment of the disclosure;
FIGS. 6A to 6E are flowcharts illustrating an example of a method in which a UE accesses an ON-SNPN, performs mutual authentication, and then securely receives provisioning of SO-SNPN credentials from a PS, according to an embodiment of the disclosure;
FIGS. 7A to 7E are flowcharts illustrating an example of a method in which a UE accesses an ON-SNPN, performs mutual authentication, and then securely receives provisioning of SO-SNPN credentials from a PS, according to an embodiment of the disclosure;
FIGS. 8A and 8B are flowcharts illustrating an example of a method in which a UE accesses an ON-SNPN, performs mutual authentication, and then securely receives provisioning of SO-SNPN credentials from a PS, according to an embodiment of the disclosure;
FIG. 9 illustrates the configuration of a terminal according to an embodiment of the disclosure; and
FIG. 10 illustrates the configuration of a network entity according to an embodiment of the disclosure.

### [Mode for Invention]

Hereinafter, various embodiments of the disclosure will be described in detail in conjunction with the accompanying drawings. In describing embodiments of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the respective drawings, the same or corresponding elements are provided with the same or corresponding reference numerals.

The advantages and features of the disclosure and ways to achieve them will be apparent by making reference to embodiments as described below in detail in conjunction with the accompanying drawings. Furthermore, the size of each element does not completely reflect the actual size. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in various embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

In the following description, a base station is an entity that allocates resources to terminals, and may be at least one of an eNode B (eNB), a Node B, a base station (BS), a radio access network (RAN), an access network (AN), a RAN node, a NR NB, a gNB, a wireless access unit, a base station controller, and a node on a network. A terminal may include a user equipment (UE), a mobile station (MS), a cellular phone, a smartphone, a computer, or a multimedia system capable of performing a communication function. In various embodiments of the disclosure, the case where the terminal is a UE will be described by way of example.

Furthermore, in the following description of various embodiments, systems based on LTE, LTE-A, or NR may be described by way of example, but various embodiments of the disclosure may also be applied to other communication systems having similar technical backgrounds or channel types. In addition, based on determinations by those skilled in the art, the embodiments of the disclosure may also be applied to other communication systems through some modifications without significantly departing from the scope of the disclosure.

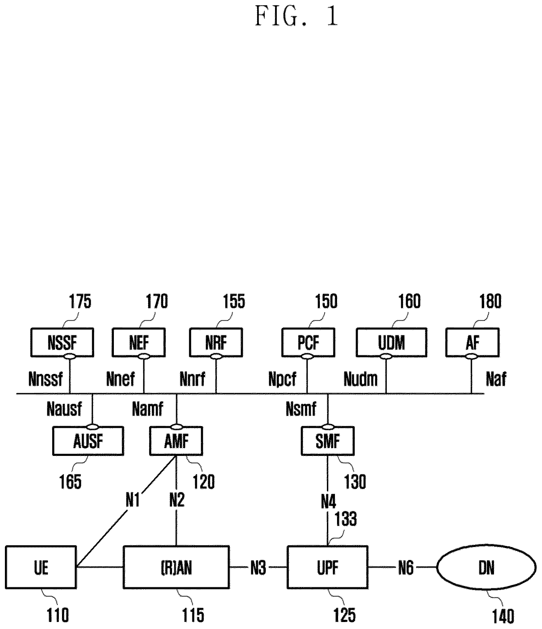

Each of functions provided by the 5G network system may be performed in units of network functions (NFs). An example of the architecture of a 5G mobile communication network is shown in FIG. 1.

FIG. 1 illustrates the architecture of a 5G mobile communication network according to an embodiment of the disclosure.

Referring to FIG. 1, a 5G mobile communication network may include at least one of an access and mobility management function (AMF) 120 which manages network access and mobility of a UE 110, a session management function (SMF) (130) which performs functions related to a session regarding the UE 110, a user plane function (UPF) 125 which is responsible for the delivery of user data and is controlled by the SMF 130, an application function (AF) 180 which communicates with the 5GC to provide application services, a network exposure function (NEF) 170 which supports communication with the AF 180, a unified data management (UDM) 160 and a unified data repository (UDR) (not shown) for data storage and management, a policy and control function (PCF) 150 of managing policies, or a data network (DN) 140 (e.g., Internet) via which user data is transferred.

In addition to the above NFs, an operation, administration, and management (OAM) server (not shown), which is a system for managing the UE 110 and the 5G mobile communication network, may exist. Furthermore, the 5G mobile communication network may further include at least one of a RAN (e.g., a base station) 115, an authentication server function (AUSF) 165, a network slice selection function (NSSF) 175, or a network repository function (NRF) 155.

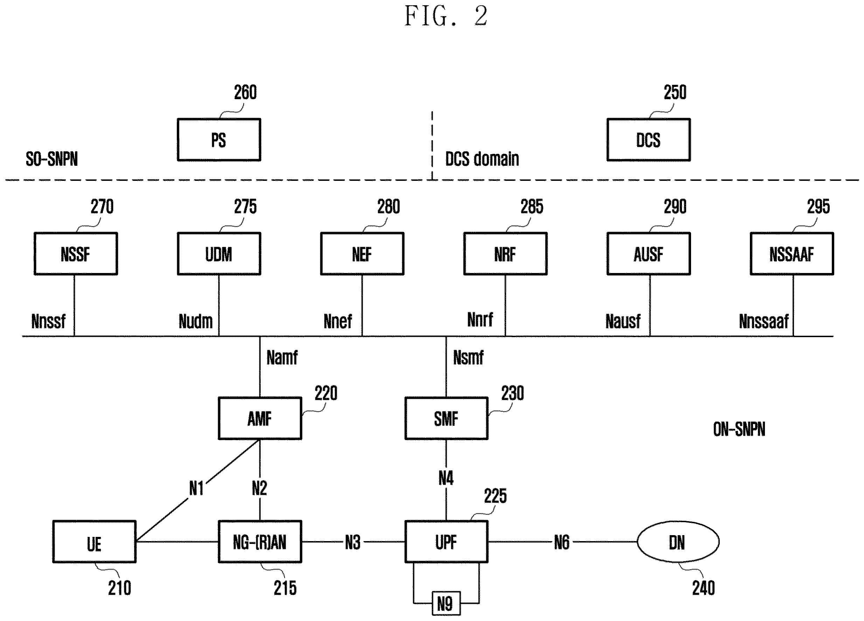

FIG. 2 illustrates the architecture of a network for provisioning credentials of a UE according to an embodiment of the disclosure.

The network shown in FIG. 2 may be included in a wireless communication system (e.g., 5^{th} generation system (SGS)), and may include an element which is the same as or similar to at least one of the elements (e.g., NFs) of the 5G cellular network illustrated in FIG. 1. For example, a UE 210, an NG-RAN 215, a UPF 225, and a DN 240 of FIG. 2 may correspond to the UE 110, the RAN 115, the UPF 125, and the DN 140 of FIG. 1, respectively. Further, an AMF 220 and an SMF 230 of FIG. 2 may correspond to the AMF 120 and the SMF 130 of FIG. 1, respectively. In addition, an NSSF 270, a UDM 275, an NEF 280, an NRF 285, and an AUSF 290 of FIG. 2 may correspond to the NSSF 175, the UDM 160, the NEF 170, the NRF 155, and the AUSF 165 of FIG. 1, respectively.

According to an embodiment, the UE 210, the NG-RAN 215, the UPF 225, the DN 240, the AMF 220, the SMF 230, the NSSF 270, the UDM 275, the NEF 280, the NRF 285, and the AUSF 290 may be included in an onboarding-standalone non-public network (SNPN) (ON-SNPN), and a provisioning server (PS) 260 may be included in a subscription owner-SNPN (SO-SNPN).

According to various embodiments of the disclosure, credentials of SO-SNPN may be provisioned for a UE 210 that does not have credential information (hereinafter referred to as `credential') of the SO-SNPN, based on the network architecture shown in FIG. 2. In an embodiment, the UE 210 may receive the SO-SNPN credentials from the PS 260 after performing an authentication operation. The authentication operation according to an embodiment may include an operation in which the UE 210 transmits a registration request to the ON-SNPN and performs authentication with a default credentials server (DCS) 250 by using default credentials provisioned when the UE 210 is manufactured. Alternatively, the authentication operation according to an embodiment may include an operation of selectively performing additional authentication with the DCS 250 after the UE 210 performs authentication with the ON-SNPN.

As such, the UE 210, which is manufactured without SO-SNPN credentials, may perform mutual authentication with the DCS 250 or the ON-SNPN based on the default credentials of the UE 210 after making a registration request from the ON-SNPN, in order to obtain the credentials of SO-SNPN to be serviced. The DCS 250 is a network or entity that authenticates the UE 210 and may exist inside or outside the ON-SNPN. The PS 260 is a network or entity having the SO-SNPN credential of the UE 260, and may be located inside or outside the ON-SNPN, and may exist in the same domain as that of the DCS 250 or a different domain.

Since the ON-SNPN does not have subscription information or subscription data of the UE 210, the UDM 275 of the ON-SNPN may not be used to authenticate the UE 210 or provision credentials. Alternatively, the UDM 275 of the ON-SNPN may not exist in the ON-SNPN.

When the authentication operation is performed, and in case that the DCS 250 is an authentication authorization accounting (AAA) server, a network slice-specific authentication and authorization function (NSSAAF) 295 may be used to perform protocol conversion (e.g., conversion between a service based interface (SBI) and a remote authentication dial-in user service (RADIUS)). When the authentication operation is successfully performed and access to the ON-SNPN is completed, the UE 210 may perform a provisioning process in which the SO-SNPN credentials are provided from the PS 260 through a control plane. In the provisioning process, when the DCS 250 or PS 260 exists outside the ON-SNPN domain, the NEF 280 of the ON-SNPN may be used.

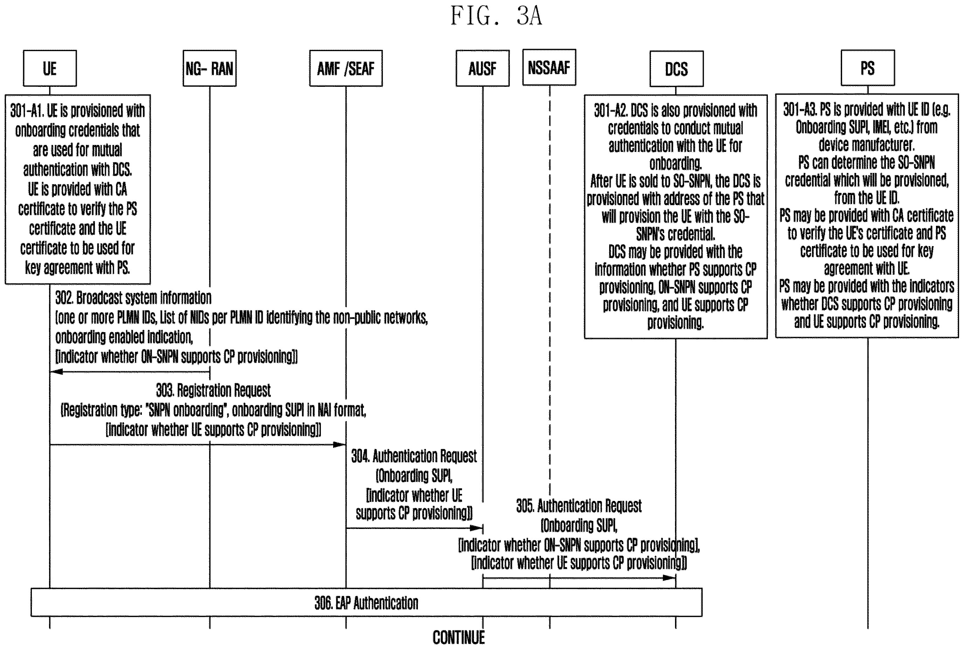

Hereinafter, operations according to various embodiments performed in the network environment shown in FIG. 2 will be described with reference to FIGS. 3A to 8B. Elements (e.g., UE, DCS, the AMF, or PS) described in FIGS. 3A to 8B may correspond to the elements shown in FIG. 2.

The disclosure suggests various embodiments according to content transferred by the UE and the PS, in order to provide end-to-end protection between the UE and the PS, when the PS provisions the credentials of SO-SNPN using a control plane.

FIGS. 3A to 3C are flowcharts illustrating an example of a method in which a UE accesses an ON-SNPN, performs mutual authentication, and then receives provisioning of SO-SNPN credentials from a PS by using a user plane, according to an embodiment of the disclosure.

The signaling order of FIGS. 3A to 3C may be changed depending on circumstances. In addition, some of the operations of FIGS. 3A to 3C may be omitted depending on circumstances, and two or more operations may be combined and performed as one operation.

For the procedures shown in FIGS. 3A to 3C, one or more of the following configurations may be performed in advance.

### 301-A1: First pre-configuration

A UE manufacturer may provision a UE with credentials to be used for mutual authentication with the DCS when manufacturing the UE. The UE may have a certificate authority (CA) certificate to verify a certificate of the PS and a certificate of the UE itself.

### 301-A2: Second pre-configuration

For the purpose of onboarding, a UE manufacturer may provision a DCS with credentials to be used for mutual authentication with UEs accessing the ON-SNPN. After the UE is sold to the SO-SNPN owner, the UE manufacturer may provision the DCS with at least one of the address of a PS, by which credentials of the SO-SNPN can be provisioned to the UE, or a CA certificate capable of verifying the certificate of the PS. When provisioning using a control plane is performed, the address of the PS may be used when the DCS searches for the PS to trigger provisioning on the PS. The DCS may receive all or part of information about whether the PS, ON-SNPN, or UE support provisioning using a control plane.

### 301-A3: Third pre-configuration

The UE manufacturer may provide the PS with the ID (e.g., onboarding subscriber permanent identifier (SUPI), international mobile equipment identity (IMEI), etc.) of the UE sold to the owner of the SO-SNPN. The PS stores the UE ID and may later use the UE ID to find SO-SNPN credentials to be provided to a UE having the corresponding UE ID. The PS may have a CA certificate to verify the certificate of the UE and a certificate of the PS itself. The PS may receive information about whether the DCS and the UE support provisioning using a control plane from the UE manufacturer.

Referring to FIGS. 3A to 3C, in operations 301-A1, 301-A2, and 301-A3, a first pre-configuration (301-A1), a second pre-configuration (301-A2), and a third pre-configuration (301-A3) may be performed. The first pre-configuration, the second pre-configuration, and the third pre-configuration may be simultaneously performed, or the three pre-configurations may be sequentially performed instead of being performed simultaneously. If performed sequentially, the order may not be fixed.

The first pre-configuration and/or the second pre-configuration may include a process required for, when a UE accesses an ON-SNPN that does not have subscription information of the UE, successful authentication with the help of a DCS capable of authenticating the UE (a process in which the UE and the DCS are pre-provisioned with credentials), and a process required for the UE to subsequently successfully obtain the SO-SNPN credentials from the PS (a process of storing the address of the PS in the DCS and a process of storing a CA certificate capable of verifying a certificate of the PS). The first pre-configuration and/or the third pre-configuration may include a process of configuring certificates required for signing when the UE and PS transmit information to generate ephemeral public keys (configuring a UE certificate/CA certificate and a PS certificate/CA certificate in the UE and PS, respectively). Through the second pre-configuration, the DCS may be previously provided with an indicator about whether the PS, ON-SNPN, or UE support provisioning using a control plane or, if not, may be provided with the indicator through the registration process. Through the third pre-configuration, the PS may be previously provided with an indicator about whether the DCS or UE supports provisioning using a control plane from the UE manufacturer, or may be provided later from another entity.

In operation 302, a NG-RAN may broadcast broadcast system information. The UE may receive broadcast system information. The broadcast system information may include one or more public land mobile network (PLMN) identifiers (IDs), a network ID for each PLMN ID, and an onboarding enabled indication. A combination of a PLMN ID and a network ID may indicate a non-public network (NPN). The NG-RAN may provide the UE with an indicator about whether the ON-SNPN supports provisioning using a control plane.

In operation 303, the UE may select an ON-SNPN based on the broadcasting system information received from the NG-RAN and transmit a registration request message to an AMF/SEAF. For example, transmission of the registration request message may be triggered when a power-on event occurs in the UE or there is a user's input. The registration request message may include a registration type and an onboarding subscription concealed identifier (SUCI). The registration type may include "SNPN Onboarding" indicating that the UE does not have subscription information for the corresponding NPN. For example, Onboarding SUCI may have the format such as "username@realm". Here, the realm part may represent a DCS. The UE may include, in a registration request message, an indicator indicating whether the UE supports provisioning using a control plane and transmit the same.

In operation 304, the AMF/SEAF may receive a registration request message from the UE and identify the Onboarding SUCI included in the received registration request message. In addition, the AMF/SEAF may identify the DCS based on the realm part of the onboarding SUCI and transmit an authentication request message (Authentication Request) to the AUSF capable of communicating with the identified DCS. The corresponding message may include an indicator, received in operation 303, indicating whether the UE supports provisioning using a control plane.

In operation 305, the AUSF may transmit an authentication request message to the DCS based on the authentication request message. The authentication request message may include information included in the authentication request message, which has been received by the AUSF from the AMF in operation 304. Additionally, the authentication request message may include an indicator about whether the ON-SNPN supports provisioning using a control plane. In case that the DCS is an AAA server, the AUSF may transmit an authentication request message to the DCS through an NSSAAF for protocol conversion. The ON-SNPN and DCS may be in a contractual relationship. In addition, when the DCS exists outside the domain of the ON-SNPN, the exchange of messages between the ON-SNPN and the DCS may be performed through the NEF. Alternatively, the AUSF may replace the functional role of DCS in the authentication process.

In operation 306, the UE and the DCS may perform extensible authentication protocol (EAP) authentication (e.g., EAP-transport layer security (TLS)).

In operation 307, when the DCS is able to know, based on the indicator received in operation 305 or the indicator configured by the second pre-configuration, that at least one entity (e.g., UE, ON-SNPN, DCS, PS) does not support provisioning using a control plane, the DCS may proceed to operation 311. Before proceeding to operation 311, the DCS may transfer, to the PS, an indicator indicating that provisioning using the user plane is to be performed. Even if the DCS finds that the method using the control plane is not performed because at least one entity does not support provisioning using a control plane, operations 308 to 310 may be performed as they are. If the DCS does not know whether the PS supports provisioning using a control plane based on the second pre-configuration, operation 308 may be performed.

In operation 308, the DCS may transmit, to the PS, the indicators received in operation 305 (e.g., an indicator indicating whether the ON-SNPN supports provisioning using a control plane, an indicator indicating whether the terminal supports provisioning using a control plane, etc.) and an indicator about whether the DCS supports provisioning using a control plane.

In operation 309, based on the indicators received in operation 308 or the indicators configured by the third pre-configuration, the PS may be prepared to transmit an indicator indicating that if at least one entity (e.g., the UE, the ON-SNPN, the DCS, or the PS) does not support provisioning using a control plane, provisioning using the user plane is performed.

In operation 310, the PS may transmit, to the DCS, an indicator indicating that provisioning using the user plane is to be performed.

In operation 311, the DCS may transmit an EAP response message to the AUSF. The EAP response message may include an authentication success message (EAP success), an Onboarding SUPI indicating a UE, keying material for generating a key to be used for communication with a UE in the ON-SNPN, and an indicator, which has been received in operation 310, indicating that provisioning using a user plane is to be performed.

In operation 312, the AUSF may generate K_ausf (intermediate key) based on the keying material in the EAP response message received in operation 310.

In operation 313, the AUSF may transmit an EAP response message to the AMF/SEAF. The EAP response message transmitted to the AMF/SEAF may include an authentication success message (EAP success), K_seaf (anchor key) generated from K_ausf, Onboarding SUPI, and an indicator indicating that provisioning using the user plane is performed.

In operation 314, the AMF/SEAF may transmit the EAP response message to the UE. The EAP response message transmitted to the UE may include an authentication success message (EAP success), a 5G key set identifier (ngKSI) indicating a key, an ABBA parameter, and an indicator indicating that provisioning using the user plane is performed.

In operation 315, the UE may generate K_ausf by using a method corresponding to a method in which the AUSF generates K_ausf in operation 312.

In operation 316, the AMF/SEAF may transmit a non-access stratum (NAS) Security Mode Command message for algorithm negotiation with the UE.

In operation 317, the UE may transmit a NAS Security Mode Complete message.

In operation 318, the UE may request PDU session establishment and perform provisioning using the user plane with the PS.

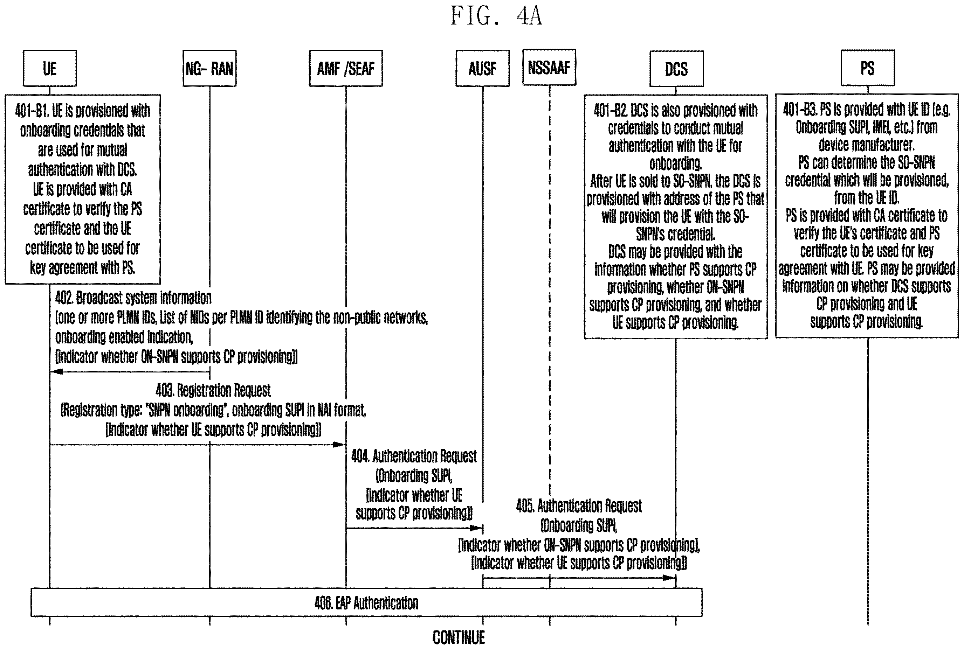

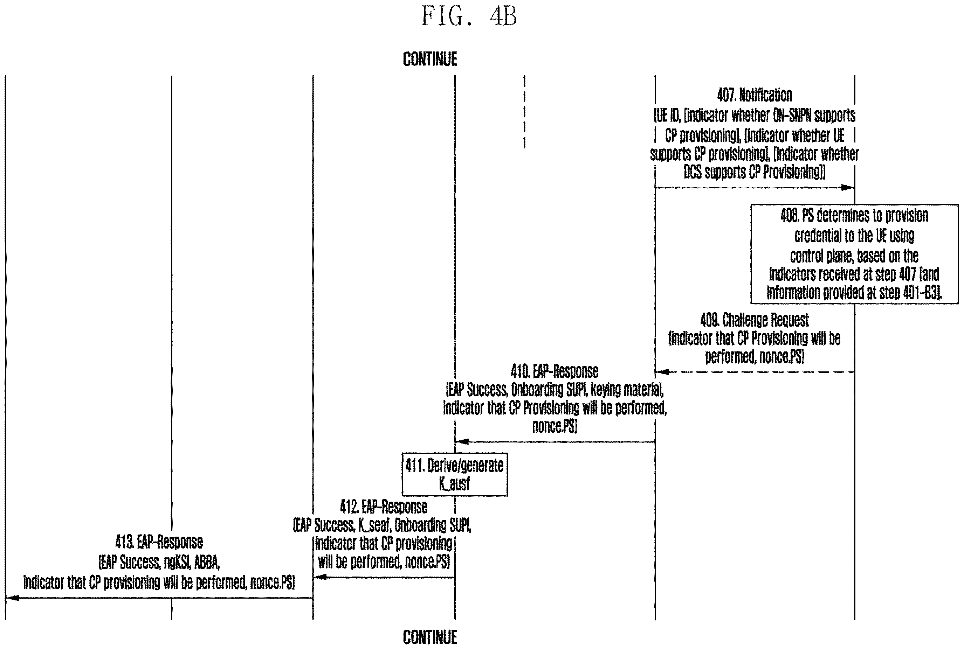

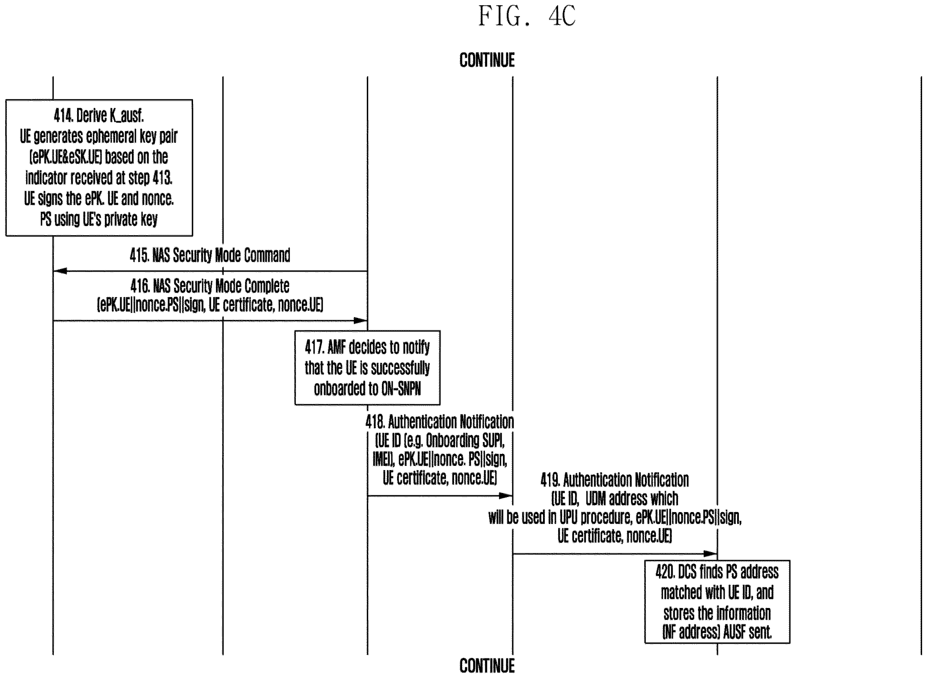

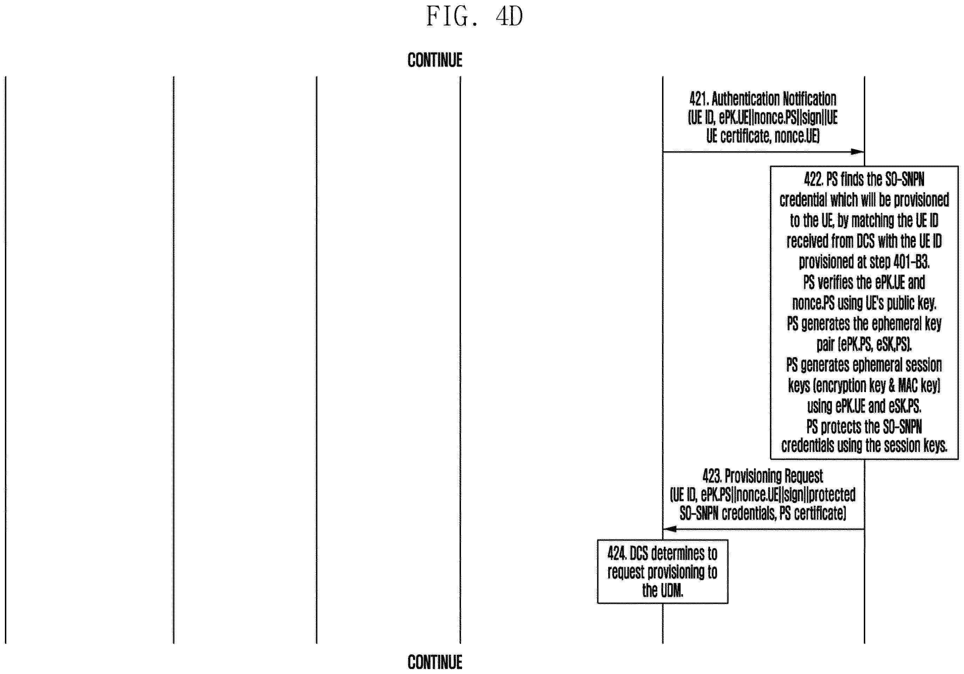

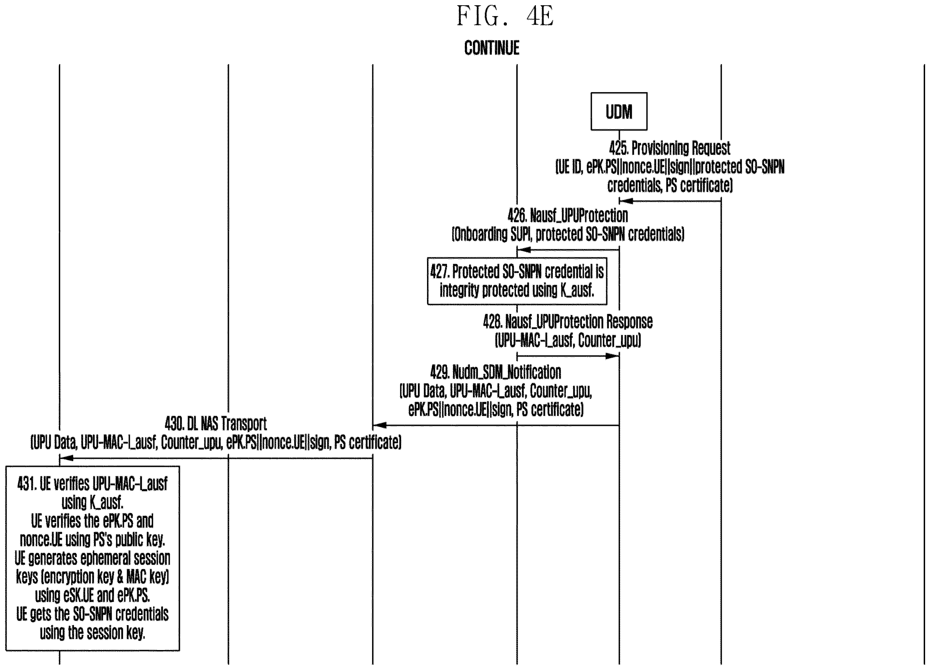

FIGS. 4A to 4E are flowcharts illustrating an example in which a UE accesses an ON-SNPN, performs mutual authentication, and then securely receives provisioning of SO-SNPN credentials from a PS, according to an embodiment of the disclosure.

The signaling order of FIGS. 4A to 4E may be changed depending on circumstances. In addition, some of the operations of FIGS. 4A to 4E may be omitted depending on circumstances, or two or more operations may be combined and performed as one operation.

For the procedures shown in FIGS. 4A to 4E, one or more of the following configurations may be performed in advance.

### 401-B1: First pre-configuration

A UE manufacturer may provision a UE with credentials to be used for mutual authentication with a DCS when manufacturing the UE. The UE may have a CA certificate to verify a certificate of the PS and a certificate of the UE itself.

### 401-B2: Second pre-configuration

For the purpose of onboarding, a UE manufacturer may provision a DCS with credentials to be used for mutual authentication with UEs accessing the ON-SNPN. After the UE is sold to the SO-SNPN owner, the UE manufacturer may provision the DCS with at least one of the address of a PS, by which credentials of the SO-SNPN can be provisioned to the UE, or a CA certificate capable of verifying a certificate of the PS. When provisioning using a control plane is performed, the address of the PS may be used when the DCS searches for the PS to trigger provisioning on the PS. The DCS may receive information about whether the PS, ON-SNPN, or UE support provisioning using a control plane.

### 401-B3: Third pre-configuration

The UE manufacturer may provide the PS with the ID (e.g., Onboarding SUPI, international mobile equipment identity (IMEI), etc.) of the UE sold to the owner of the SO-SNPN. The PS stores the UE ID and may later use the UE ID to find SO-SNPN credentials to be provided to a UE having the corresponding UE ID. The PS may have a CA certificate to verify the certificate of the UE and a certificate of the PS itself. The PS may receive information about whether the DCS and the UE support provisioning using a control plane from the UE manufacturer.

Referring to FIGS. 4A to 4E, in operations 401-B1, 401-B2, and 401-B3, a first pre-configuration (401-B1), a second pre-configuration (401-B2), and a third pre-configuration (401-B3) may be performed. The first pre- configuration, the second pre-configuration, and the third pre-configuration may be simultaneously performed, or the three pre-configurations may be sequentially performed instead of being performed simultaneously. If performed sequentially, the order may not be fixed.

The first pre-configuration and/or the second pre-configuration may include a process required for, when a UE accesses an ON-SNPN that does not have subscription information of the UE, successful authentication with the help of a DCS capable of authenticating the UE (a process in which the UE and the DCS are pre-provisioned with credentials), and a process required for the UE to subsequently successfully obtain the SO-SNPN credentials from the PS (a process of storing the address of the PS in the DCS and a process of storing a CA certificate capable of verifying a certificate of the PS). The first pre-configuration and/or the third pre-configuration may include a process of configuring certificates required for signing when the UE and PS transmit information to generate ephemeral public keys (configuring a UE certificate/CA certificate and a PS certificate/CA certificate in the UE and PS, respectively). Through the second pre-configuration, the DCS may be previously provided with an indicator about whether the PS, ON-SNPN, or UE support provisioning using a control plane or, if not, may be provided with the indicator through the registration process. Through the third pre-configuration, the PS may be previously provided with an indicator about whether the DCS or UE supports provisioning using a control plane from the UE manufacturer, or may be provided later from another entity.

In operation 402, a NG-RAN may broadcast broadcast system information. The UE may receive broadcast system information. The broadcast system information may include one or more PLMN IDs, a list of network IDs for each PLMN ID, and an onboarding enabled indication. A combination of a PLMN ID and a network ID may indicate an NPN. The NG-RAN may provide the UE with an indicator about whether the ON-SNPN supports provisioning using a control plane.

In operation 403, the UE may select an ON-SNPN based on the broadcasting system information received from the NG-RAN and transmit a registration request message to an AMF/SEAF. For example, transmission of the registration request message may be triggered when a power-on event occurs in the UE or there is a user's input. The registration request message may include a registration type and an Onboarding SUCI. The registration type may include "SNPN Onboarding" indicating that the UE does not have subscription information for the corresponding NPN. For example, the Onboarding SUCI may have the format such as "username@realm". Here, the realm part may represent a DCS. The UE may include, in a registration request message, an indicator about whether the UE supports provisioning using a control plane and transmit the same.

In operation 404, the AMF/SEAF may receive a registration request message from the UE and identify the Onboarding SUCI included in the received registration request message. In addition, the AMF/SEAF may identify the DCS based on the realm part of the onboarding SUCI and transmit an authentication request message (Authentication Request) to the AUSF capable of communicating with the identified DCS. The corresponding message may include an indicator, received in operation 403, indicating whether the UE supports provisioning using a control plane.

In operation 405, the AUSF may transmit an authentication request message to the DCS based on the authentication request message received from the AMF/SEAF. The authentication request message transmitted to the DCS may include information included in the authentication request message, which has been received by the AUSF from the AMF/SEAF in operation 404. Additionally, the authentication request message may include an indicator about whether the ON-SNPN supports provisioning using a control plane. In case that the DCS is an AAA server, the AUSF may transmit an authentication request message to the DCS through an NSSAAF for protocol conversion. The ON-SNPN and DCS may be in a contractual relationship. In addition, when the DCS exists outside the domain of the ON-SNPN, the exchange of messages between the ON-SNPN and the DCS may be performed through the NEF. Alternatively, the AUSF may replace the functional role of DCS in the authentication process.

In operation 406, the UE and the DCS may perform EAP authentication (e.g., EAP-TLS).

In operation 407, the DCS may transmit a notification to the PS based on the result of operation 406. The notification may include a UE ID, and may include indicators received in operation 405 or provided by the second pre-configuration. For example, the notification may include at least one indicator among an indicator about whether the UE ID and ON-SNPN support provisioning using a control plane, an indicator about whether the UE supports provisioning using a control plane, or an indicator about whether the DCS supports provisioning using a control plane.

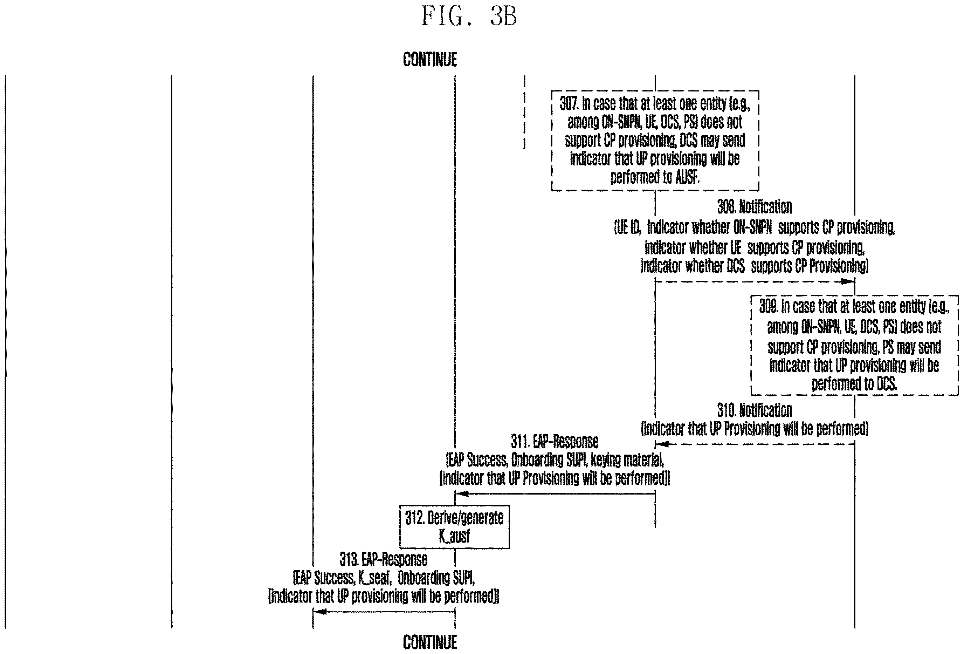

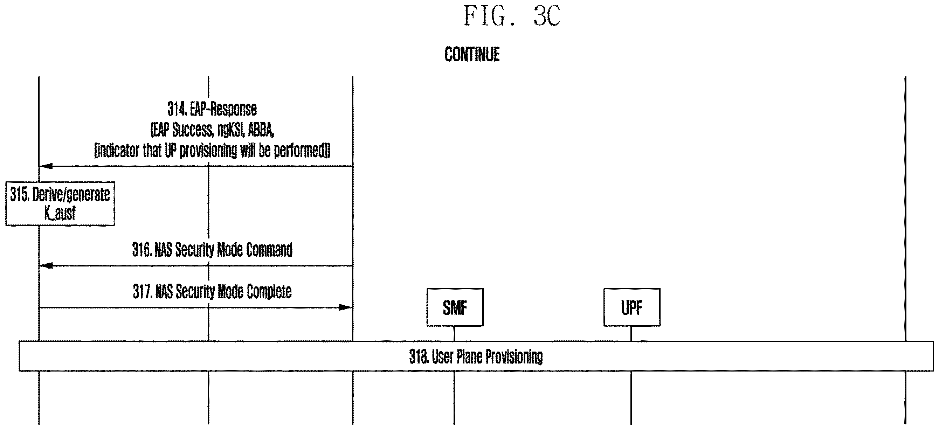

In case that the indicators received in operation 407 or the indicators provided by the third pre-configuration indicate that all the UE/ON-SNPN/DCS support provisioning using a control plane and the PS also prefers provisioning using a control plane, the PS may determine to provide the credentials of SO-SNPN to the UE by using a control plane in operation 408. In operation 408, if at least one entity of the UE/ON-SNPN/DCS/PS does not support provisioning using a control plane, based on the indicators received by the PS in operation 407, the indicators configured by the third pre-configuration, and information about whether the PS supports provisioning using a control plane, operations 310 to 318 of FIG. 3 may be performed.

In operation 409, the PS may transmit, to the DCS, an indicator indicating that the provisioning using the control plane is to be performed and a nonce value (e.g., nonce.PS) generated by the PS. The nonce value generated by the PS may be received by the UE in a subsequent operation, and may be signed with a private key of the UE and transmitted back to the PS, thereby preventing replay attacks.

In operation 410, the DCS may transmit an EAP response message to the AUSF. The EAP response message may include at least one of an authentication success message (EAP Success), Onboarding SUPI indicating a UE, keying material for generating a key to be used for communication with a UE in the ON-SNPN, pieces of information received in operation 409 (e.g., an indicator indicating that the provisioning using the control plane is to be performed, and a nonce value generated by the PS), or a CA certificate, which is capable of verifying a certificate of the PS and configured in 401-B2 if an indicator indicating that the provisioning using the control plane is to be performed has been received.

In operation 411, the AUSF may generate K_ausf based on the keying material in the EAP response message received in operation 410.

In operation 412, the AUSF may transmit an EAP response message to the AMF/SEAF. The EAP response message transmitted to the AMF/SEAF may include at least one of an authentication success message (EAP success), K_seaf generated from K_ausf, an onboarding SUPI, an indicator indicating that the provisioning using the control plane is performed, a nonce value generated by the PS, or CA certificates capable of verifying a certificate of the PS.

In operation 413, the AMF/SEAF may transmit the EAP response message to the UE. The EAP response message transmitted to the UE may include at least one of an authentication success message (EAP success), a 5G key set identifier (ngKSI) indicating a key, an ABBA parameter, an indicator indicating that the provisioning using the control plane is performed, a nonce value generated by the PS, or CA certificates capable of verifying a certificate of the PSs.

In operation 414, the UE may generate K_ausf by using a method corresponding to a method in which the AUSF has generated K_ausf in operation 411. In addition, the UE may generate an ephemeral key pair based on the indicator, received in operation 413, indicating that the provisioning using the control plane is performed. The ephemeral key pair may be configured by an ephemeral public key of UE (ePK.UE) and an ephemeral private key of UE (eSK.UE). The UE may store the eSK.UE, and may sign the ePK.UE with a private key corresponding to a certificate of the UE and sign the nonce value generated by the PS with a private key of the UE.

In operation 415, the AMF/SEAF may transmit a NAS Security Mode Command message for algorithm negotiation with the UE.

In operation 416, the UE may transmit a NAS Security Mode Complete message. The message may include ePK.UE, a value obtained by signing the ePK.UE with a private key of the UE, a value obtained by signing a nonce value generated by the PS with a private key of the UE, a certificate of the UE, and/or a nonce value generated by the UE (e.g., nonce.UE). For example, an ephemeral public key (ePK.UE) generated by the UE may be used as the nonce.UE.

In operation 417, the AMF/SEAF may know that the UE has successfully completed a process of onboarding on the ON-SNPN, and may prepare to notify of the same.

In operation 418, the AMF/SEAF may transmit an authentication notification message to the AUSF. The authentication notification message may include information indicating that the UE has successfully completed the onboarding process, a UE ID, the ePK.UE received in operation 416, a value obtained by signing the ePK.UE with a private key of the UE, a value obtained by signing a nonce value generated by the PS with a private key of the UE, a certificate of the UE, and/or a nonce value generated by the UE.

In operation 419, the AUSF may transmit the authentication notification message to the DCS. The authentication notification message transmitted to the DCS may include a UE ID, the address of a UDM to be used in a UE parameters update (UPU) process, ePK.UE, a value obtained by signing the ePK.UE with a private key of the UE, a value obtained by signing a nonce value generated by the PS with a private key of the UE, a certificate of the UE, and/or a nonce value generated by the UE.

In operation 420, the DCS may find the address of the PS provided by the second pre-configuration that matches the UE ID received in operation 419. In addition, the corresponding information may be stored.

In operation 421, the DCS may transmit the authentication notification message to the PS. The authentication notification message transmitted to the PS may include a UE ID, ePK.UE, a value obtained by signing the ePK.UE with a private key of the UE, a value obtained by signing a nonce value generated by the PS with a private key of the UE, a certificate of the UE, and/or a nonce value generated by the UE.

In operation 422, the PS may match the UE ID received in operation 421 with the UE ID provided by the third pre-configuration to find the credentials of SO-SNPN to be provided to the corresponding UE. The PS may verify the UE certificate received in operation 421, by using the CA certificate provided by the third pre-configuration. The PS may verify an ePK.UE value signed using a UE public key included in the UE certificate and a nonce value generated by the signed PS. When verification is completed, the PS may generate its own ephemeral key pairs (ePK.PS, eSK.PS) and generate ephemeral session keys by using the ePK.UE and eSK.PS. The ephemeral session keys may be configured by a key to be used for encryption (ephemeral encryption key) and a key to be used for integrity protection (ephemeral MAC key). The PS may obtain a value (cipher-text value) by encrypting the credentials of SO-SNPN to be delivered to the corresponding UE with an ephemeral encryption key, and may calculate a value (MAC-tag value) by hashing the value (cipher-text value) with a MAC key. The encrypted and integrity-protected SO-SNPN credentials may be configured by a cipher-text value and a MAC-tag value. The PS may sign the public key (ePK.PS) generated by the PS itself with a private key corresponding to a certificate of the PS, and the nonce value generated by the UE may also be signed using the private key of the PS.

In operation 423, the PS may transmit a provisioning request message to the DCS. The message may include a UE ID, ePK.PS, a value obtained by signing the ePK.PS with a private key of the PS, a value obtained by signing the nonce generated by the UE, a certificate of the PS, and/or encrypted and integrity-protected SO-SNPN credentials.

In operation 424, the DCS may prepare to deliver the provisioning request message to the UDM. Alternatively, the DCS or PS may replace the functional role of the UDM described later.

In operation 425, the DCS may transmit the provisioning request message to the UDM. The message may include information received from the PS in operation 423 (e.g., a UE ID, ePK.PS, a value obtained by signing the ePK.PS with a private key of the PS, a value obtained by signing the nonce generated by the UE, a certificate of the PS, and/or encrypted and integrity-protected SO-SNPN credentials).

In operation 426, the UDM may request a Nausf_UPUProtection service to perform a UPU process. The corresponding message may include Onboarding SUPI and encrypted and integrity-protected SO-SNPN credentials.

In operation 427, the encrypted and integrity-protected SO-SNPN credentials may be integrity-protected by the AUSF using K_ausf.

In operation 428, the AUSF may transfer a value of UPU-MAC-I_ausf and a value of Counter_upu calculated in operation 427 to the UDM through Nausf_UPUProtection Response. Counter_upu is a value that starts from 0x00 0x00 and increases each time UPU-MAC-I_ausf is calculated, and may prevent replay attacks.

In operation 429, the UDM may transmit, to the AMF/SEAF through Nudm_SDM_Notification service, UPD data, a value of UPU-MAC-I_ausf and a value of Counter_upu calculated by the AUSF in operation 427, and ePK.PS, a value obtained by signing the ePK.PS with a private key of the PS, a value obtained by signing the nonce value generated by the UE with a private key of the PS, and/or a certificate of the PS, which are received in operation 425.

In operation 430, the AMF/SEAF may transmit a DL NAS transport message to the UE. The DL NAS transport message may include UPU data, UPU-MAC-I_ausf, Counter_upu, and ePK.PS, a value obtained by signing the ePK.PS with a private key of the PS, a value obtained by signing the nonce value generated by the UE with a private key of the PS, and/or a certificate of the PS, which are received in operation 429.

In operation 431, the UE may verify UPU-MAC-I_ausf by using K_ausf. The UE may verify a certificate of the PS by using the CA certificate provided by the first pre-configuration. The UE may use a public key included in a certificate of the PS to verify the values signed by the PS (a value obtained by signing ePK.PS with a private key of the PS and a value obtained by signing the nonce value generated by the UE with a private key of the PS). After the verification is completed, the UE may generate ephemeral session keys by using eSK.UE and ePK.PS. Ephemeral session keys are configured by a key to be used for encryption (ephemeral encryption key) and a key to be used for integrity protection (ephemeral MAC key). These keys may be the same as the keys generated by the PS in operation 422. The UE may verify the MAC-tag value by using the ephemeral MAC key and obtain SO-SNPN credentials from the cipher-text value by using the ephemeral encryption key.

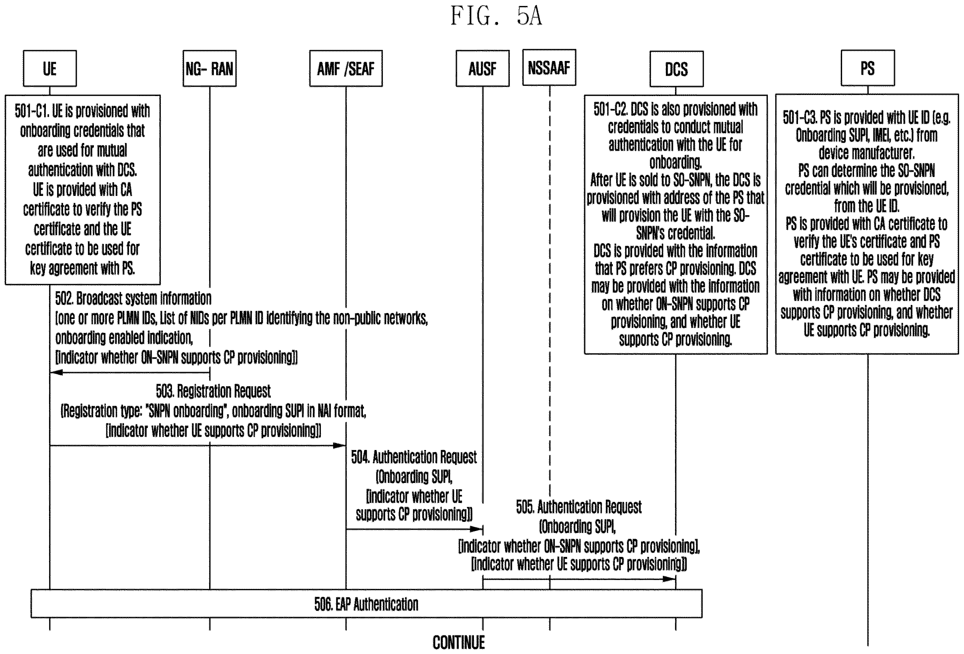

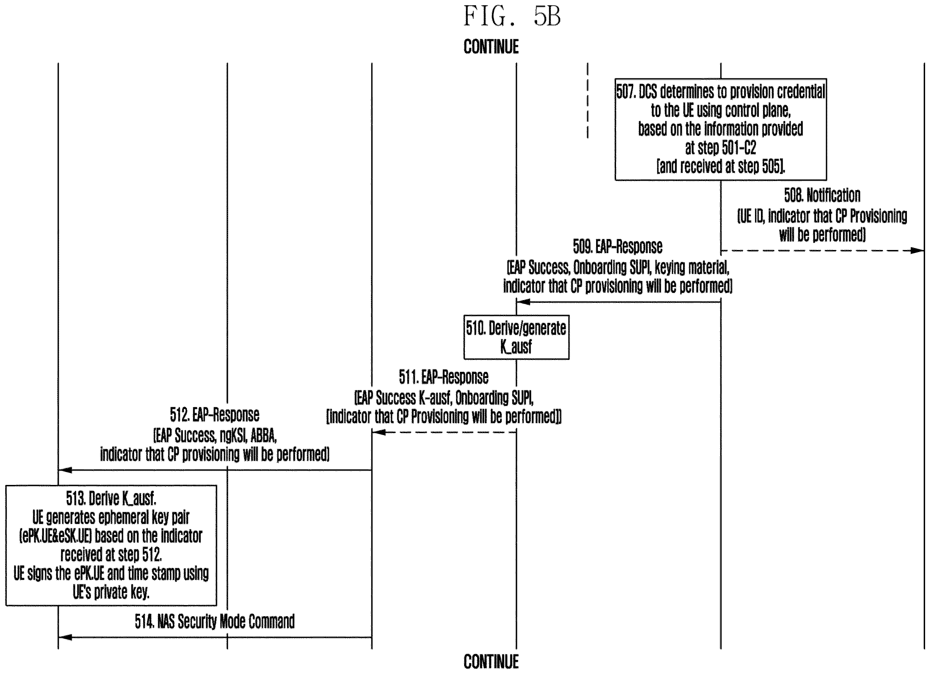

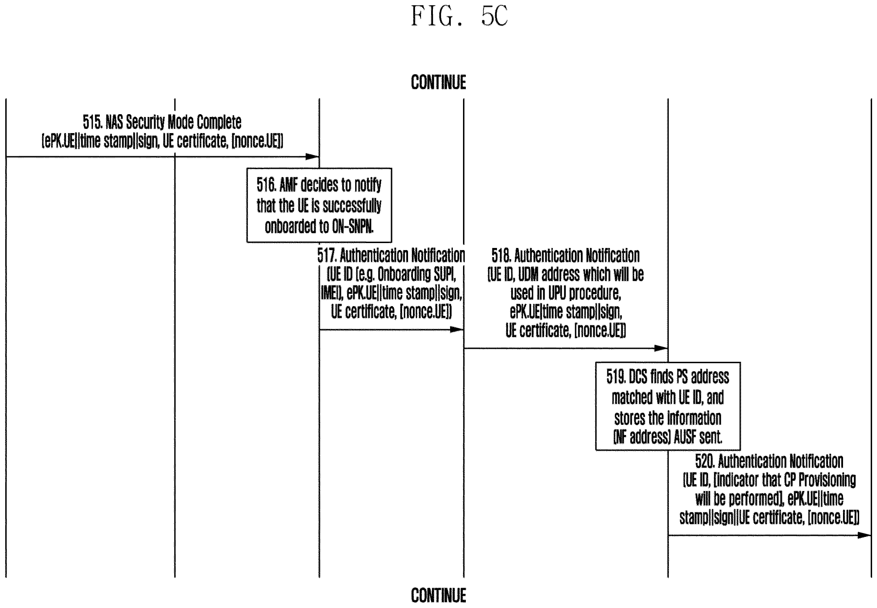

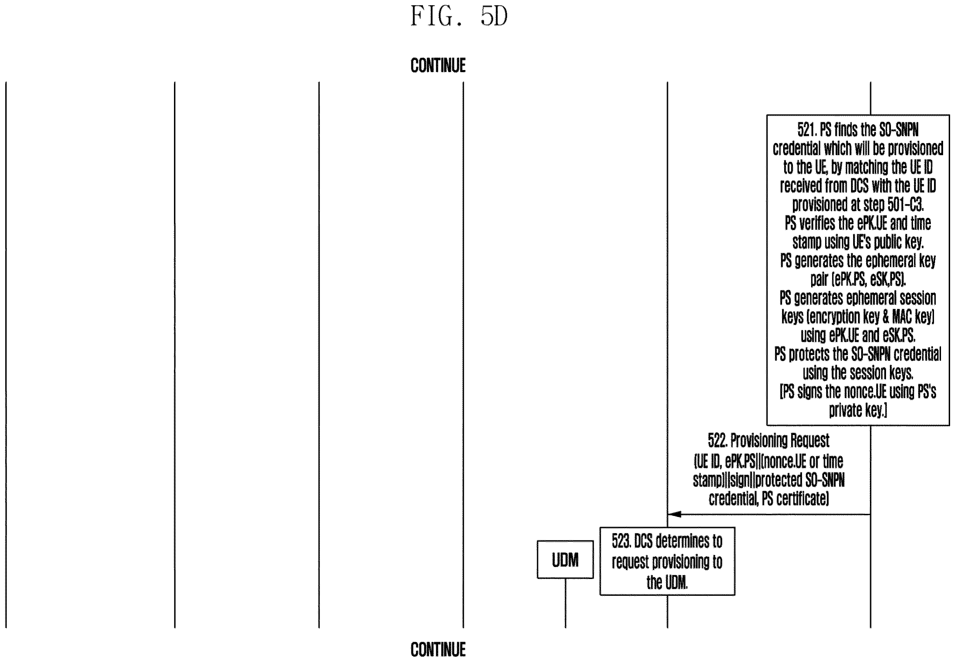

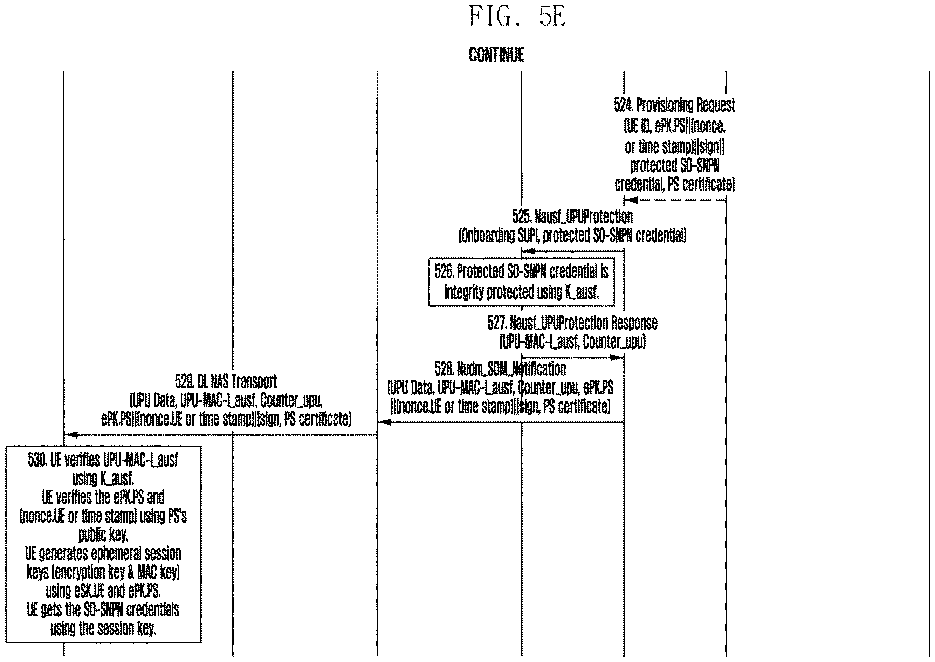

FIGS. 5A to 5E are flowcharts illustrating an example of a method in which a UE accesses an ON-SNPN, performs mutual authentication, and then securely receives provisioning of SO-SNPN credentials from a PS, according to an embodiment of the disclosure.

The signaling order of FIGS. 5A to 5E may be changed depending on circumstances. In addition, some of the operations of FIGS. 5A to 5E may be omitted depending on circumstances, or two or more operations may be combined and performed as one operation.

For the procedures shown in FIGS. 5A to 5E, one or more of the following configurations may be performed in advance.

### 501-C1: First pre-configuration

A UE manufacturer may provision a UE with credentials to be used for mutual authentication with a DCS when manufacturing the UE. The UE may have a CA certificate to verify a certificate of the PS and a certificate of the UE itself.

### 501-C2: Second pre-configuration

For the purpose of onboarding, a UE manufacturer may provision a DCS with credentials to be used for mutual authentication with UEs accessing the ON-SNPN. After the UE is sold to the SO-SNPN owner, the UE manufacturer may provision the DCS with at least one of the address of a PS, by which credentials of the SO-SNPN can be provisioned to the UE, or a CA certificate capable of verifying a certificate of the PS. When provisioning using a control plane is performed, the address of the PS may be used when the DCS searches for the PS to trigger provisioning on the PS. The DCS may have information indicating that the PS prefers provisioning using the control plane. Additionally, the DCS may be provided with information about whether the ON-SNPN and the UE support provisioning using a control plane.

### 501-C3: Third pre-configuration

The UE manufacturer may provide the PS with the ID (e.g., Onboarding SUPI, IMEI, etc.) of the UE sold to the owner of the SO-SNPN. The PS stores the UE ID and may later use the UE ID to find SO-SNPN credentials to be provided to a UE having the corresponding UE ID. The PS may have a CA certificate to verify the certificate of the UE and a certificate of the PS itself. The PS may receive information about whether the DCS and the UE support provisioning using a control plane from the UE manufacturer.

Referring to FIGS. 5A to 5E, in operations 501-C1, 501-C2, and 501-C3, a first pre-configuration (501-C1), a second pre-configuration (501-C2), and a third pre-configuration (501-C3) may be performed. The first pre-configuration, the second pre-configuration, and the third pre-configuration may be simultaneously performed, or the three pre-configurations may be sequentially performed instead of being performed simultaneously. If performed sequentially, the order may not be fixed.

The first pre-configuration and/or the second pre-configuration may include a process required for, when a UE accesses an ON-SNPN that does not have subscription information of the UE, successful authentication with the help of a DCS capable of authenticating the UE (a process in which the UE and the DCS are pre-provisioned with credentials), and a process required for the UE to subsequently successfully obtain the SO-SNPN credentials from the PS (a process of storing the address of the PS in the DCS and a process of storing a CA certificate capable of verifying a certificate of the PS). The first pre-configuration and/or the third pre-configuration may include a process of configuring certificates required for signing when the UE and PS transmit information to generate ephemeral public keys (configuring a UE certificate/CA certificate and a PS certificate/CA certificate in the UE and PS, respectively). Through the second pre-configuration, the DCS may be previously provided with an indicator about whether the PS, ON-SNPN, or UE support provisioning using a control plane or, if not, may be provided with the indicator through the registration process. Through the third pre-configuration, the PS may be previously provided with an indicator about whether the DCS or UE supports provisioning using a control plane from the UE manufacturer, or may be provided later from another entity.

In operation 502, a NG-RAN may broadcast broadcast system information. The UE may receive broadcast system information. The broadcast system information may include one or more PLMN IDs, a list of network IDs for each PLMN ID, and an onboarding enabled indication. A combination of a PLMN ID and a network ID may indicate NPN. The NG-RAN may provide the UE with an indicator about whether the ON-SNPN supports provisioning using a control plane.

In operation 503, the UE may select an ON-SNPN based on the broadcasting system information received from the NG-RAN and transmit a registration request message to an AMF/SEAF. For example, transmission of the registration request message may be triggered when a power-on event occurs in the UE or there is a user's input. The registration request message may include a registration type and an Onboarding SUCI. The registration type may include "SNPN Onboarding" indicating that the UE does not have subscription information for the corresponding NPN. For example, the Onboarding SUCI may have the format such as "username@realm". Here, the realm part may represent a DCS. The UE may include, in a registration request message, an indicator about whether the UE supports provisioning using a control plane, and transmit the same.

In operation 504, the AMF/SEAF may receive a registration request message from the UE and identify the Onboarding SUCI included in the received registration request message. In addition, the AMF/SEAF may identify the DCS based on the realm part of the onboarding SUCI and transmit an authentication request message (Authentication Request) to the AUSF capable of communicating with the identified DCS. The corresponding message may include an indicator, received in operation 503, indicating whether the onboarding SUCI, and/or UE support provisioning using a control plane.

In operation 505, the AUSF may transmit an authentication request message to the DCS based on the authentication request message. The authentication request message may include information included in the authentication request message, which has been received by the AUSF from the AMF in operation 504. Additionally, the authentication request message may include an indicator about whether the ON-SNPN supports provisioning using a control plane. In case that the DCS is an AAA server, the AUSF may transmit an authentication request message to the DCS through an NSSAAF for protocol conversion. The ON-SNPN and DCS may be in a contractual relationship. In addition, when the DCS exists outside the domain of the ON-SNPN, the exchange of messages between the ON-SNPN and the DCS may be performed through the NEF. Alternatively, the AUSF may replace the functional role of DCS in the authentication process.

In operation 506, the UE and the DCS may perform EAP authentication (e.g., EAP-TLS).

In operation 507, the DCS may prepare for the provisioning operation using control plane if, based on the indicators received in operation 505 or provided by the second pre-configuration, the DCS knows that all the UE/ON-SNPN/DCS/PS support the provisioning using the control plane. If at least one entity of the UE/ON-SNPN/DCS/PS does not support provisioning using a control plane, operations 311 to 318 of FIG. 3 may be performed.

In operation 508, the DCS may deliver, to the PS, a notification indicating that the provisioning using the control plane will be used. The notification may include a UE ID and/or an indicator indicating that the provisioning using the control plane is used. If the notification is received by the PS, the PS may prepare in advance the credentials of SO-SNPN to be forwarded to the corresponding UE.

In operation 509, the DCS may transmit an EAP response message to the AUSF. The EAP response message may include at least one of an authentication success message (EAP Success), Onboarding SUPI indicating a UE, keying material for generating a key to be used for communication with a UE in the ON-SNPN, an indicator indicating that the provisioning using the control plane is to be performed, or a CA certificate, which is capable of verifying a certificate of the PS and configured in 501-C2 if the indicator indicating that the provisioning using the control plane is to be performed has been received.

In operation 510, the AUSF may generate K_ausf based on the keying material in the EAP response message received in operation 509.

In operation 511, the AUSF may transmit an EAP response message to the AMF/SEAF. The EAP response message transmitted to the AMF/SEAF may include at least one of an authentication success message, K_seaf generated from K_ausf, an onboarding SUPI, an indicator indicating that the provisioning using the control plane is performed, or CA certificates capable of verifying a certificate of the PS.

In operation 512, the AMF/SEAF may transmit the EAP response message to the UE. The EAP response message transmitted to the UE may include at least one of an authentication success message, a 5G key set identifier (ngKSI) indicating a key, an ABBA parameter, an indicator indicating that the provisioning using the control plane is performed, or a CA certificate capable of verifying a certificate of the PS.

In operation 513, the UE may generate K_ausf by using a method corresponding to a method in which the AUSF has generated K_ausf in operation 510. In addition, the UE may generate an ephemeral key pair based on the indicator, received in operation 512, indicating that the provisioning using the control plane is performed. The ephemeral key pair may be configured by an ephemeral public key of UE (ePK.UE) and an ephemeral private key of UE (eSK.UE). The UE may store the eSK.UE, and may sign the ePK.UE with a private key corresponding to a certificate of the UE and generate a time stamp to sign the same with a private key of the UE.

In operation 514, the AMF/SEAF may transmit a NAS Security Mode Command message for algorithm negotiation.

In operation 515, the UE may transmit the NAS Security Mode Complete message. The ePK.UE, a value obtained by signing the ePK.UE with a private key of the UE, a time stamp generated by the UE, a value obtained by signing the time stamp with a private key of the UE, and/or a certificate of the UE may be transmitted through the message. When the time stamp generated by the UE is received, by the PS, in an operation described later, the time stamp beyond a time range allowed by the PS may not be accepted by the PS, so as to prevent replay attacks. The UE may also transmit a nonce value, which is generated by the UE, for the authentication of the PS.

In operation 516, the AMF/SEAF may know that the UE has successfully completed a process of onboarding on the ON-SNPN, and may prepare to notify of the same.

In operation 517, the AMF/SEAF may transmit an authentication notification message to the AUSF. The authentication notification message may include information indicating that the UE has successfully completed the onboarding process, a UE ID, the ePK.UE received in operation 515, a value obtained by signing the ePK.UE with a private key of the UE, a time stamp generated by the UE, a value obtained by signing the time stamp with a private key of the UE, and/or a certificate of the UE. In operation 515, the authentication notification message may also include a nonce value, if any, generated by the UE.

In operation 518, the AUSF may transmit the authentication notification message to the DCS. The authentication notification message transmitted to the DCS may include a UE ID, the address of a UDM to be used in a UE parameters update (UPU) process, ePK.UE, a value obtained by signing the ePK.UE with a private key of the UE, a time stamp generated by the UE, a value obtained by signing the time stamp with a private key of the UE, a certificate of the UE, and a nonce value generated by the UE, if received, in operation 517.

In operation 519, the DCS may find the address of the PS provided by the second pre-configuration that matches the UE ID received in operation 518.

In operation 520, the DCS may transmit the authentication notification message to the PS. The authentication notification message transmitted to the PS may include a UE ID, ePK.UE, a value obtained by signing the ePK.UE with a private key of the UE, a time stamp generated by the UE, a value obtained by signing the time stamp with a private key of the UE, a certificate of the UE, and a nonce value generated by the UE, if received, in operation 518. In addition, the authentication notification message may include an indicator indicating that the provisioning using the control plane is to be used if operation 508 has not been performed.

In operation 521, the PS may match the UE ID received in operation 520 with the UE ID provided by the third pre-configuration to find the credentials of SO-SNPN to be provided to the corresponding UE. The PS may verify the UE certificate received in operation 520, by using the CA certificate provided by the third pre-configuration. The PS may verify the ePK.UE value signed using a UE public key included in the UE certificate and the time stamp value of the UE. When verification is completed, the PS may generate its own ephemeral key pairs (ePK.PS, eSK.PS) and generate ephemeral session keys by using the ePK.UE and eSK.PS. The ephemeral session keys may be configured by a key to be used for encryption (ephemeral encryption key) and a key to be used for integrity protection (ephemeral MAC key). The PS may obtain a value (cipher-text value) by encrypting the credentials of SO-SNPN to be delivered to the corresponding UE with an ephemeral encryption key, and may calculate a value (MAC-tag value) by hashing the cipher-text value with a MAC key. The encrypted and integrity-protected SO-SNPN credentials may be configured by a Cipher-text value and a MAC-tag value. The PS may sign the public key (ePK.PS) generated by the PS itself with a private key corresponding to a certificate of the PS. In operation 520, if the nonce value generated by the UE is received, the nonce value generated by the UE may also be signed with the private key. If the nonce value generated by the UE has not been received, the time stamp generated by the PS may be signed with the private key of the PS.

In operation 522, the PS may transmit a provisioning request message to the DCS. The message may include a UE ID, ePK.PS, a value obtained by signing the ePK.PS with a private key of the PS, a value obtained by signing the nonce value generated by the UE, a time stamp generated by the PS, a value obtained by signing the generated time stamp, a certificate of the PS, and/or encrypted and integrity-protected SO-SNPN credentials.

In operation 523, the DCS may prepare to deliver the provisioning request message to the UDM. Alternatively, the DCS or PS may replace the functional role of the UDM described later.

In operation 524, the DCS may transmit the provisioning request message to the UDM. The message may include information received from the PS in operation 522 (e.g., a UE ID, ePK.PS, a value obtained by signing the ePK.PS with a private key of the PS, a value obtained by signing the nonce value generated by the UE, a time stamp generated by the PS, a value obtained by signing the generated time stamp, a certificate of the PS, and/or encrypted and integrity-protected SO-SNPN credentials).

In operation 525, the UDM may request a Nausf_UPUProtection service to perform a UPU process. The corresponding message may include Onboarding SUPI and encrypted and integrity-protected SO-SNPN credentials.

In operation 526, the encrypted and integrity-protected SO-SNPN credentials may be integrity-protected by the AUSF using K_ausf.

In operation 527, the AUSF may transfer a value of UPU-MAC-I_ausf and a value of Counter_upu calculated in operation 526 to the UDM through Nausf_UPUProtection Response. Counter_upu is a value that starts from 0x00 0x00 and increases each time UPU-MAC-I_ausf is calculated, and may prevent replay attacks.

In operation 528, the UDM may transmit, to the AMF/SEAF through Nudm_SDM_Notification service, UPD data, a value of UPU-MAC-I_ausf and a value of Counter_upu calculated by the AUSF in operation 526, ePK.PS, a value obtained by signing the ePK.PS with a private key of the PS, a value obtained by signing the nonce value generated by the UE with a private key of the PS, a time stamp generated by the PS, a value obtained by signing the time stamp with a private key of the PS, and/or a certificate of the PS, which are received in operation 524.

In operation 529, the AMF/SEAF may transmit a DL NAS Transport to the UE. The DL NAS transport message may include UPU data, UPU-MAC-I_ausf, Counter_upu, ePK.PS, a value obtained by signing the ePK.PS with a private key of the PS, a value obtained by signing the nonce value generated by the UE with a private key of the PS, a time stamp generated by the PS, a value obtained by signing the time stamp with a private key of the PS, and/or a certificate of the PS, which are received in operation 528.

In operation 530, the UE may verify UPU-MAC-I_ausf by using K_ausf. The UE may verify a certificate of the PS by using the CA certificate provided by the first pre-configuration. The UE may use a public key included in a certificate of the PS to verify the values signed by the PS (a value obtained by signing ePK.PS with a private key of the PS, a value obtained by signing the nonce value generated by the UE with a private key of the PS, or a value obtained by signing the time stamp generated by the PS). After the verification is completed, the UE may generate ephemeral session keys by using eSK.UE and ePK.PS. Ephemeral session keys are configured by a key to be used for encryption (ephemeral encryption key) and a key to be used for integrity protection (ephemeral MAC key). These keys may be the same as the keys generated by the PS in operation 521. The UE may authenticate the MAC-tag value by using the ephemeral MAC key and obtain SO-SNPN credentials from the cipher-text value by using the ephemeral encryption key.

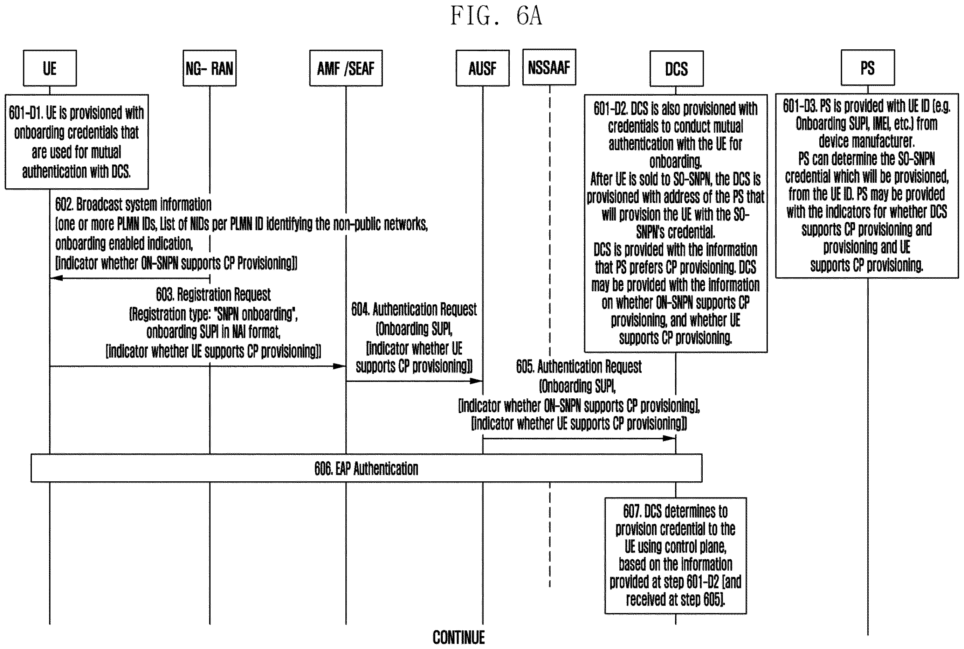

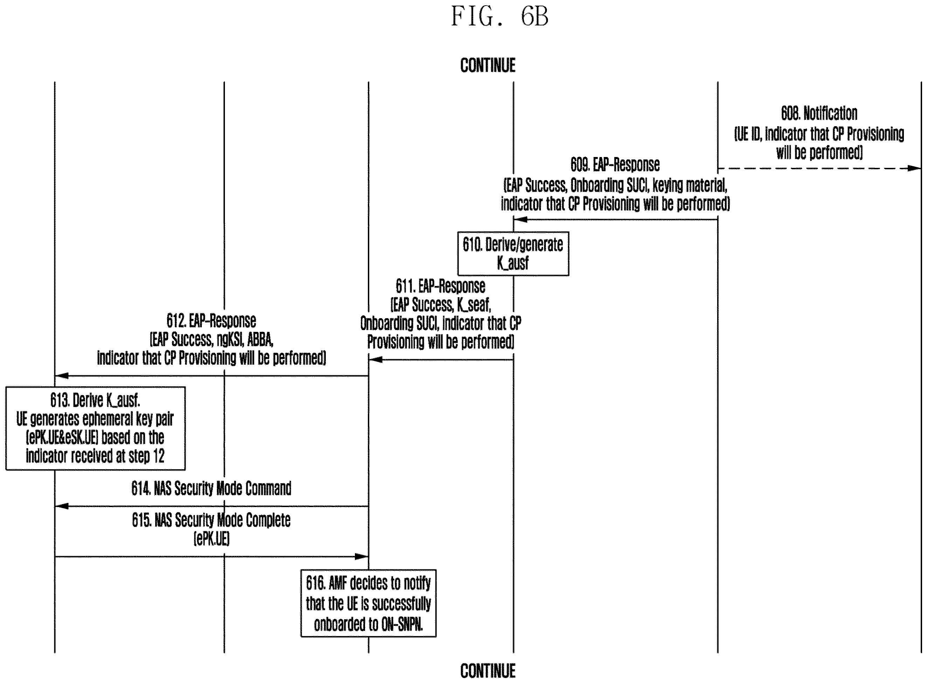

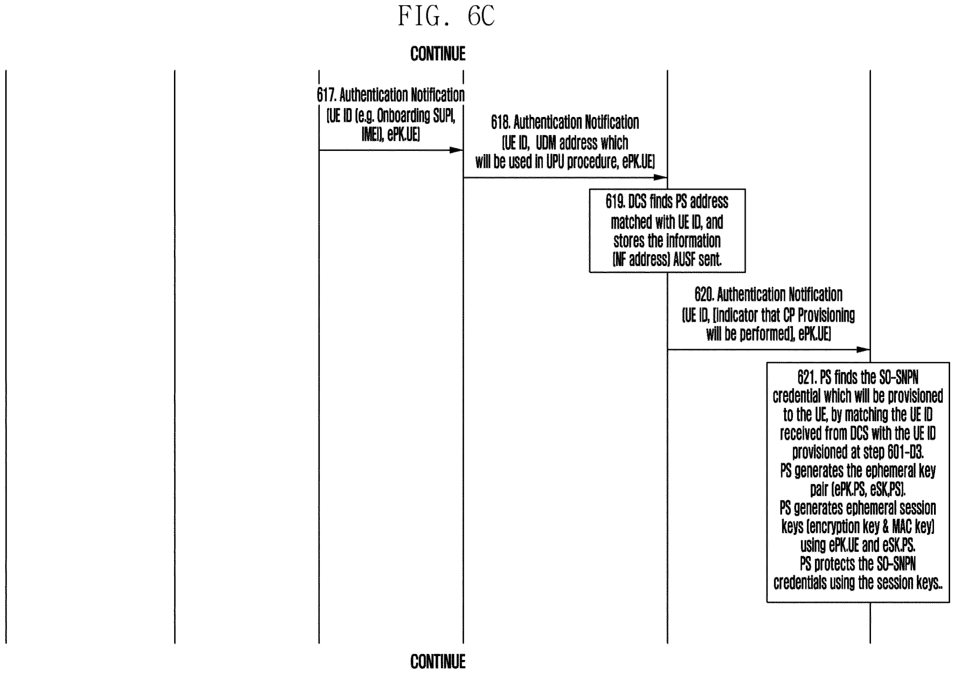

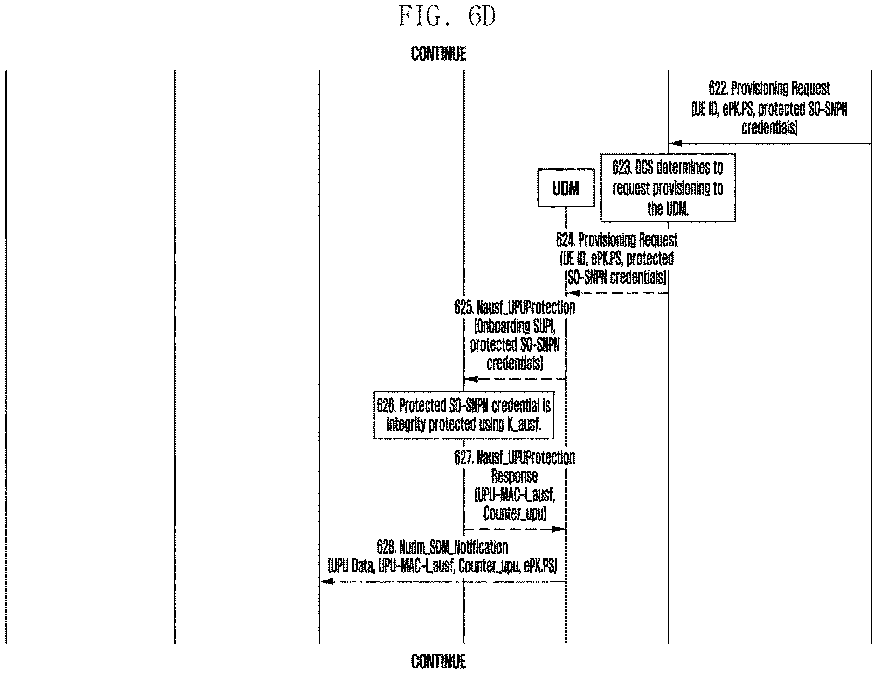

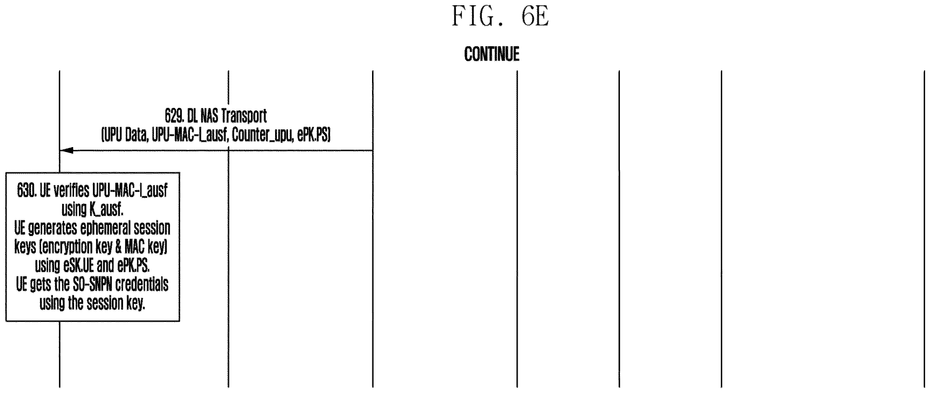

FIGS. 6A to 6E are flowcharts illustrating an example of a method in which a UE accesses an ON-SNPN, performs mutual authentication, and then securely receives provisioning of SO-SNPN credentials from a PS, according to an embodiment of the disclosure.

The signaling order of FIGS. 6A to 6E may be changed depending on circumstances. In addition, some of the operations of FIGS. 6A to 6E may be omitted depending on circumstances, or two or more operations may be combined and performed as one operation.

For the procedures shown in FIGS. 6A to 6E, one or more of the following configurations may be performed in advance.

### 601-D1: First pre-configuration

A UE manufacturer may provision a UE with credentials to be used for mutual authentication with a DCS when manufacturing the UE.

### 601-D2: Second pre-configuration

For the purpose of onboarding, a UE manufacturer may provision a DCS with credentials to be used for mutual authentication with UEs accessing the ON-SNPN. After the UE is sold to the SO-SNPN owner, the UE manufacturer may provision the DCS with the address of a PS, by which credentials of the SO-SNPN can be provisioned to the UE. When provisioning using a control plane is performed, the address of the PS may be used when the DCS searches for the PS to trigger provisioning on the PS. The DCS may have information indicating that the PS prefers provisioning using the control plane. Additionally, the DCS may be provided with information about whether the ON-SNPN and the UE support provisioning using a control plane.

### 601-D3: Third pre-configuration

The UE manufacturer may provide the PS with the ID (e.g., Onboarding SUPI, IMEI, etc.) of the UE sold to the owner of the SO-SNPN. The PS stores the UE ID and may later use the UE ID to find SO-SNPN credentials to be provided to a UE having the corresponding UE ID. The PS may receive information about whether the DCS and the UE support provisioning using a control plane from the UE manufacturer.

Referring to FIGS. 6A to 6E, in operations 601-D1, 601-D2, and 601-D3, a first pre-configuration (601-D1), a second pre-configuration (601-D2), and a third pre-configuration (601-D3) may be performed. The first pre- configuration, the second pre-configuration, and the third pre-configuration may be simultaneously performed, or the three pre-configurations may be sequentially performed instead of being performed simultaneously. If performed sequentially, the order may not be fixed.

The first pre-configuration and/or the second pre-configuration may include a process required for, when a UE accesses an ON-SNPN that does not have subscription information of the UE, successful authentication with the help of a DCS capable of authenticating the UE (a process in which the UE and the DCS are pre-provisioned with credentials), and a process required for the UE to subsequently successfully obtain the SO-SNPN credentials from the PS (a process of storing the address of the PS in the DCS). Through the second pre-configuration, the DCS may be previously provided with an indicator about whether the PS, ON-SNPN, or UE support provisioning using a control plane or, if not, may be provided with the indicator through the registration process. Through the third pre-configuration, the PS may be previously provided with an indicator about whether the DCS or UE supports provisioning using a control plane from the UE manufacturer, or may be provided later from another entity.

In operation 602, a NG-RAN may broadcast broadcast system information. The UE may receive broadcast system information. The broadcast system information may include one or more PLMN identifiers (IDs), network IDs for each PLMN ID, and an onboarding enabled indication. A combination of a PLMN ID and a network ID may indicate NPN. The NG-RAN may provide the UE with an indicator about whether the ON-SNPN supports provisioning using a control plane.

In operation 603, the UE may select an ON-SNPN based on the broadcasting system information received from the NG-RAN and transmit a registration request message to an AMF/SEAF. For example, transmission of the registration request message may be triggered when a power-on event occurs in the UE or there is a user's input. The registration request message may include a registration type and an Onboarding SUCI. The registration type may include "SNPN Onboarding" indicating that the UE does not have subscription information for the corresponding NPN. For example, the Onboarding SUCI may have the format such as "username@realm". Here, the realm part may represent a DCS. The UE may include, in a registration request message, an indicator about whether the UE supports provisioning using a control plane, and transmit the same.

In operation 604, the AMF/SEAF may receive a registration request message from the UE and identify the Onboarding SUCI included in the received registration request message. In addition, the AMF/SEAF may identify the DCS based on the realm part of the onboarding SUCI and transmit an authentication request message (Authentication Request) to the AUSF capable of communicating with the identified DCS. The corresponding message may include an indicator, received in operation 603, indicating whether the UE supports provisioning using a control plane.

In operation 605, the AUSF may transmit an authentication request message to the DCS based on the authentication request message. The authentication request message transmitted to the DCS may include information included in the authentication request message, which has been received by the AUSF from the AMF in operation 604. Additionally, the authentication request message may include an indicator about whether the ON-SNPN supports provisioning using a control plane. In case that the DCS is an AAA server, the AUSF may transmit an authentication request message to the DCS through an NSSAAF for protocol conversion. The ON-SNPN and DCS may be in a contractual relationship. In addition, when the DCS exists outside the domain of the ON-SNPN, the exchange of messages between the ON-SNPN and the DCS may be performed through the NEF. Alternatively, the AUSF may replace the functional role of DCS in the authentication process.

In operation 606, the UE and the DCS may perform EAP authentication (e.g., EAP-TLS).

In operation 607, the DCS may prepare for the provisioning operation using control plane if, based on the indicators received in operation 605 or provided by the second pre-configuration, the DCS knows that all the UE/ON-SNPN/DCS/PS support the provisioning using the control plane. If at least one entity of the UE/ON-SNPN/DCS/PS does not support provisioning using a control plane, operations 311 to 318 of FIG. 3 may be performed.

In operation 608, the DCS may deliver, to the PS, a notification indicating that the provisioning using the control plane will be used. The notification may include a UE ID and/or an indicator indicating that the provisioning using the control plane is used. If the notification is received by the PS, the PS may prepare in advance the credentials of SO-SNPN to be forwarded to the corresponding UE.

In operation 609, the DCS may transmit an EAP response message to the AUSF. The EAP response message may include an authentication success message (EAP Success), Onboarding SUPI indicating a UE, keying material for generating a key to be used for communication with a UE in the ON-SNPN, and an indicator indicating that the provisioning using the control plane is to be performed.

In operation 610, the AUSF may generate K_ausf based on the keying material in the EAP response message received in operation 609.

In operation 611, the AUSF may transmit an EAP response message to the AMF/SEAF. The EAP response message transmitted to the AMF/SEAF may include an authentication success message, K_seaf generated from K_ausf, an onboarding SUPI, and an indicator indicating that the provisioning using the control plane is performed.

In operation 612, the AMF/SEAF may transmit the EAP response message to the UE. The EAP response message may include an authentication success message (EAP success), a 5G key set identifier (ngKSI) indicating a key, an ABBA parameter, and an indicator indicating that the provisioning using the control plane is performed.

In operation 613, the UE may generate K_ausf by using a method corresponding to a method in which the AUSF has generated K_ausf in operation 610. In addition, the UE may generate an ephemeral key pair based on the indicator, received in operation 612, indicating that the provisioning using the control plane is performed. The ephemeral key pair may be configured by an ephemeral public key of UE (ePK.UE) and an ephemeral private key of UE (eSK.UE). The UE may store the eSK.UE and prepare to deliver the ePK.UE.

In operation 614, the AMF/SEAF may transmit a NAS Security Mode Command message for algorithm negotiation.

In operation 615, the UE may transmit the NAS Security Mode Complete message. The message may include ePK.UE.

In operation 616, the AMF/SEAF may know that the UE has successfully completed a process of onboarding on the ON-SNPN, and may prepare to notify of the same.

In operation 617, the AMF/SEAF may transmit an authentication notification message to the AUSF. The authentication notification message may include information indicating that the UE has successfully completed the onboarding process, a UE ID, and/or the ePK.UE received in operation 615.

In operation 618, the AUSF may transmit the authentication notification message to the DCS. The authentication notification message transmitted to the DCS may include a UE ID, the address of a UDM to be used in a UE parameters update (UPU) process, and/or the ePK.UE.

In operation 619, the DCS may find the address of the PS provided by the second pre-configuration that matches the UE ID received in operation 618.

In operation 620, the DCS may transmit the authentication notification message to the PS. The authentication notification message may include a UE ID, ePK.UE, and an indicator indicating that the provisioning using the control plane is to be used if operation 608 has not been performed.

In operation 621, the PS may match the UE ID received in operation 620 with the UE ID provided by the third pre-configuration to find the credentials of SO-SNPN to be provided to the corresponding UE. The PS may generate its own ephemeral key pairs (ePK.PS, eSK.PS) based on the indicator provided by the DCS, and generate ephemeral session keys by using the ePK.UE and eSK.PS. The ephemeral session keys may be configured by a key to be used for encryption (ephemeral encryption key) and a key to be used for integrity protection (ephemeral MAC key). The PS may obtain a value (cipher-text value) by encrypting the credentials of SO-SNPN to be delivered to the corresponding UE with an ephemeral encryption key, and may calculate a value (MAC-tag value) by hashing the cipher-text value with a MAC key. The encrypted and integrity-protected SO-SNPN credentials may be configured by a Cipher-text value and a MAC-tag value.

In operation 622, the PS may transmit a provisioning request message to the DCS. The message may include a UE ID, ePK.PS, and/or encrypted and integrity-protected SO-SNPN credentials.

In operation 623, the DCS may prepare to deliver the provisioning request message to the UDM. Alternatively, the DCS or PS may replace the functional role of the UDM described later.

In operation 624, the DCS may transmit the provisioning request message to the UDM. The message may include information received from the PS in operation 622.

In operation 625, the UDM may request a Nausf_UPUProtection service to perform a UPU process. The corresponding message (e.g., a Nausf_UPUProtection request message) may include Onboarding SUPI and encrypted and integrity-protected SO-SNPN credentials.

In operation 626, the encrypted and integrity-protected SO-SNPN credentials may be integrity-protected by the AUSF using K_ausf.

In operation 627, the AUSF may transfer a value of UPU-MAC-I_ausf and a value of Counter_upu calculated in operation 626 to the UDM through Nausf_UPUProtection Response. Counter_upu is a value that starts from 0x00 0x00 and increases each time UPU-MAC-I_ausf is calculated, and may prevent replay attacks.

In operation 628, the UDM may transmit, to the AMF/SEAF through Nudm_SDM_Notification service, UPD data, a value of UPU-MAC-I_ausf and a value of Counter_upu calculated by the AUSF in operation 626, and/or ePK.PS received in operation 624.

In operation 629, the AMF/SEAF may transmit a DL NAS Transport to the UE. The DL NAS transport message may include UPU data, UPU-MAC-I_ausf, Counter_upu, and/or ePK.PS received in operation 628.

In operation 630, the UE may verify UPU-MAC-I_ausf by using K_ausf. The UE may generate ephemeral session keys by using eSK.UE and ePK.PS. Ephemeral session keys may be configured by a key to be used for encryption (ephemeral encryption key) and a key to be used for integrity protection (ephemeral MAC key). These keys may be the same as the keys generated by the PS in operation 621. The UE may authenticate the MAC-tag value by using the ephemeral MAC key and obtain SO-SNPN credentials from the cipher-text value by using the ephemeral encryption key.

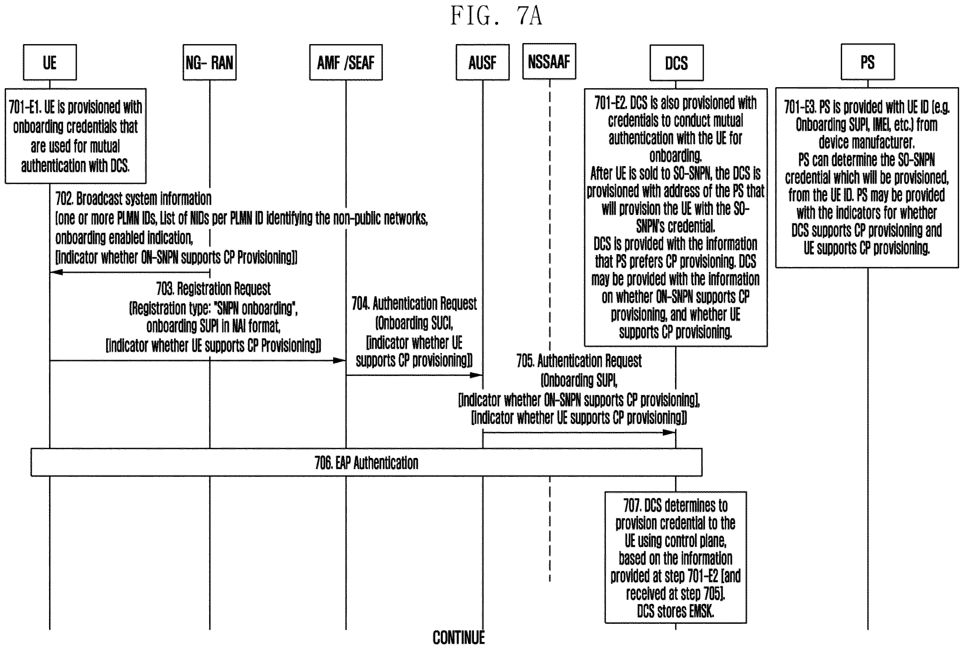

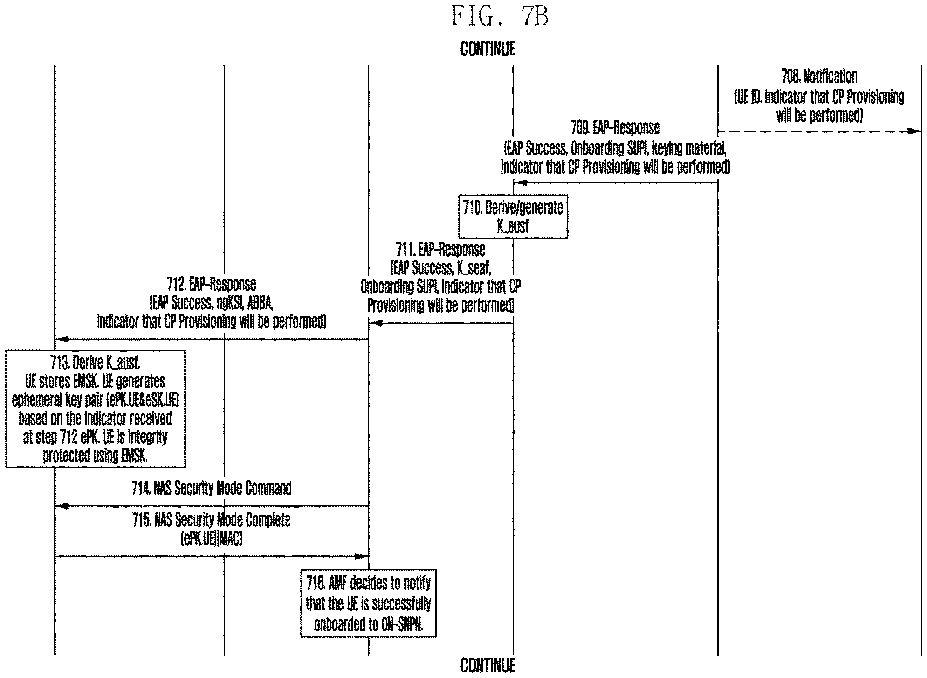

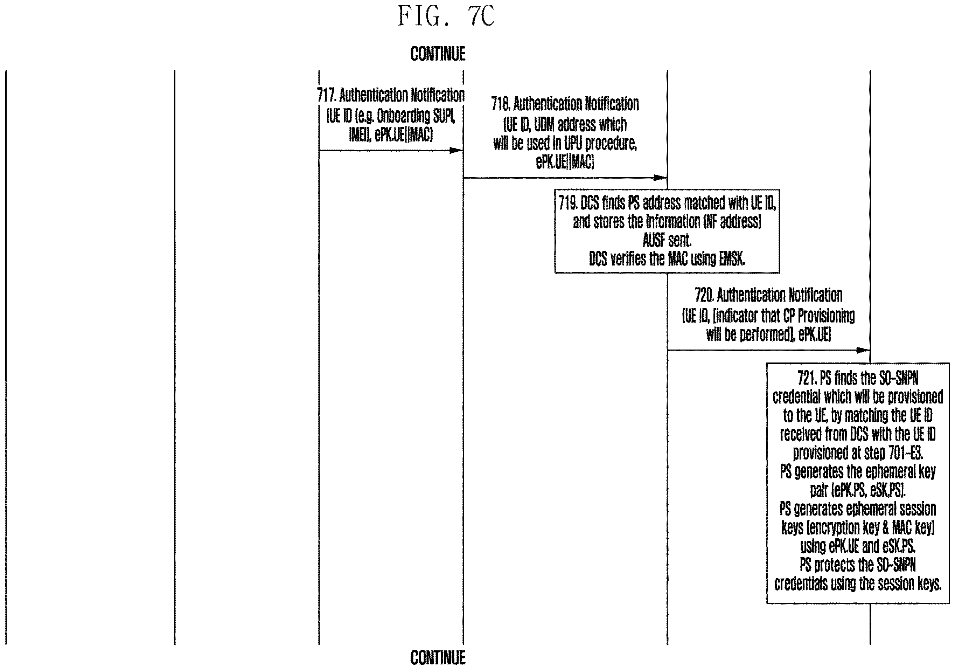

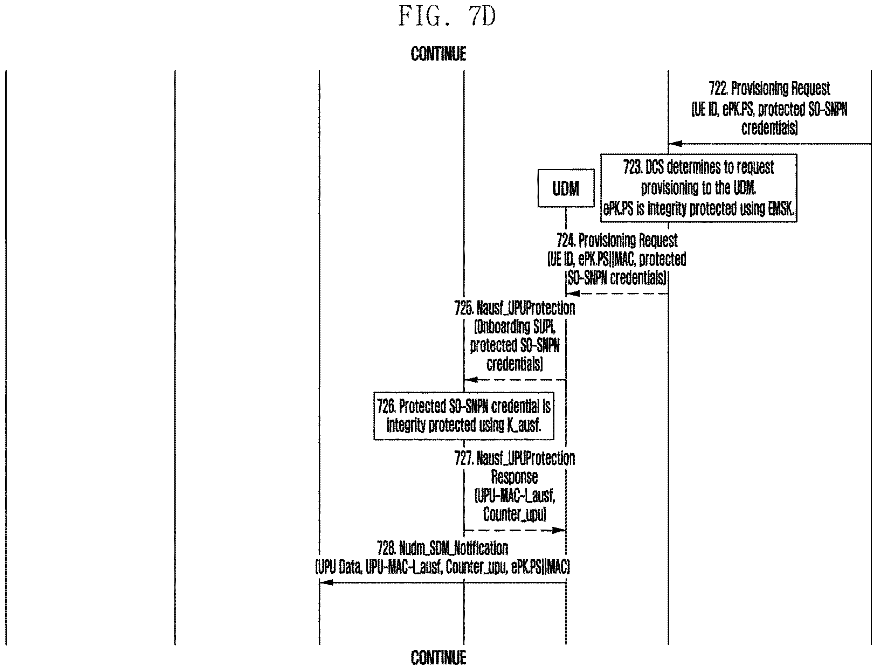

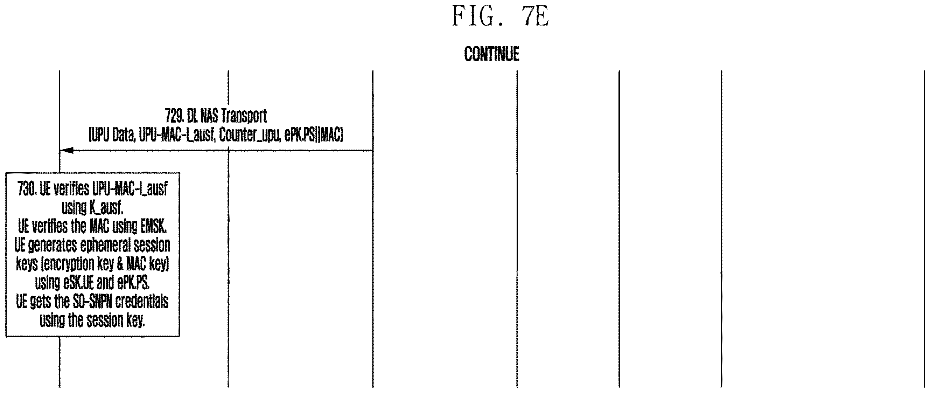

FIGS. 7A to 7E are flowcharts illustrating an example of a method in which a UE accesses an ON-SNPN, performs mutual authentication, and then securely receives provisioning of SO-SNPN credentials from a PS, according to an embodiment of the disclosure.

The signaling order of FIGS. 7A to 7E may be changed depending on circumstances. In addition, some of the operations of FIGS. 7A to 7E may be omitted depending on circumstances, or two or more operations may be combined and performed as one operation.

For the procedures shown in FIGS. 7A to 7E, one or more of the following configurations may be performed in advance.

### 701-E1: First pre-configuration

A UE manufacturer may provision a UE with credentials to be used for mutual authentication with a DCS when manufacturing the UE.

### 701-E2: Second pre-configuration

For the purpose of onboarding, a UE manufacturer may provision a DCS with credentials to be used for mutual authentication with UEs accessing the ON-SNPN. After the UE is sold to the SO-SNPN owner, the UE manufacturer may provision the DCS with the address of a PS, by which credentials of the SO-SNPN can be provisioned to the UE. When provisioning using a control plane is performed, the address of the PS may be used when the DCS searches for the PS to trigger provisioning on the PS. The DCS may have information indicating that the PS prefers provisioning using the control plane. Additionally, the DCS may be provided with information about whether the ON-SNPN and the UE support provisioning using a control plane.

### 701-E3: Third pre-configuration

The UE manufacturer may provide the PS with the ID (e.g., Onboarding SUPI, IMEI, etc.) of the UE sold to the owner of the SO-SNPN. The PS stores the UE ID and may later use the UE ID to find SO-SNPN credentials to be provided to a UE having the corresponding UE ID. The PS may receive information about whether the DCS and the UE support provisioning using a control plane from the UE manufacturer.

Referring to FIGS. 7A to 7E, in operations 701-E1, 701-E2, and 701-E3, a first pre-configuration (701-E1), a second pre-configuration (701-E2), and a third pre-configuration (701-E3) may be performed. The first pre-configuration, the second pre-configuration, and the third pre-configuration may be simultaneously performed, or the three pre-configurations may be sequentially performed instead of being performed simultaneously. If performed sequentially, the order may not be fixed.

The first pre-configuration and/or the second pre-configuration may include a process required for, when a UE accesses an ON-SNPN that does not have subscription information of the UE, successful authentication with the help of a DCS capable of authenticating the UE (a process in which the UE and the DCS are pre- provisioned with credentials), and a process required for the UE to subsequently successfully obtain the SO-SNPN credentials from the PS (a process of storing the address of the PS in the DCS). Through the second pre-configuration, the DCS may be previously provided with an indicator about whether the PS, ON-SNPN, or UE support provisioning using a control plane or, if not, may be provided with the indicator through the registration process. Through the third pre-configuration, the PS may be previously provided with an indicator about whether the DCS or UE supports provisioning using a control plane from the UE manufacturer, or may be provided later from another entity.

In operation 702, a NG-RAN may broadcast broadcast system information. The UE may receive broadcast system information. The broadcast system information may include one or more PLMN identifiers (IDs), network IDs for each PLMN ID, and an onboarding enabled indication. A combination of a PLMN ID and a network ID may indicate NPN. The NG-RAN may provide the UE with an indicator about whether the ON-SNPN supports provisioning using a control plane.

In operation 703, the UE may select an ON-SNPN based on the broadcasting system information received from the NG-RAN and transmit a registration request message to an AMF/SEAF. For example, transmission of the registration request message may be triggered when a power-on event occurs in the UE or there is a user's input. The registration request message may include a registration type and an Onboarding SUCI. The registration type may include "SNPN Onboarding" indicating that the UE does not have subscription information for the corresponding NPN. For example, the Onboarding SUCI may have the format such as "username@realm". Here, the realm part may represent a DCS. The UE may include, in a registration request message, an indicator about whether the UE supports provisioning using a control plane, and transmit the same.

In operation 704, the AMF/SEAF may receive a registration request message from the UE and identify the Onboarding SUCI included in the received registration request message. In addition, the AMF/SEAF may identify the DCS based on the realm part of the onboarding SUCI and transmit an authentication request message (Authentication Request) to the AUSF capable of communicating with the identified DCS. The corresponding message may include an indicator, received in operation 703, indicating whether the UE supports provisioning using a control plane.

In operation 705, the AUSF may transmit an authentication request message to the DCS based on the authentication request message. The authentication request message transmitted to the DCS may include information included in the authentication request message, which has been received by the AUSF from the AMF/SEAF in operation 704. Additionally, the authentication request message may include an indicator about whether the ON-SNPN supports provisioning using a control plane. In case that the DCS is an AAA server, the AUSF may transmit an authentication request message to the DCS through an NSSAAF for protocol conversion. The ON-SNPN and DCS may be in a contractual relationship. In addition, when the DCS exists outside the domain of the ON-SNPN, the exchange of messages between the ON-SNPN and the DCS may be performed through the NEF. Alternatively, the AUSF may replace the functional role of DCS in the authentication process.

In operation 706, the UE and the DCS may perform EAP authentication (e.g., EAP-TLS).

In operation 707, the DCS may prepare for the provisioning operation using control plane if, based on the indicators received in operation 705 or provided by the second pre-configuration, the DCS knows that all the UE/ON-SNPN/DCS/PS support the provisioning using the control plane. In addition, after successful authentication, the DCS may store an extended master session key (EMSK) among the generated keying materials. The EMSK is one of the keying materials generated after successful authentication and is a value that is not delivered to any other entity. If at least one entity of the UE/ON-SNPN/DCS/PS does not support provisioning using a control plane, operations 311 to 318 of FIG. 3 may be performed.

In operation 708, the DCS may deliver, to the PS, a notification indicating that the provisioning using the control plane will be used. The notification may include a UE ID and/or an indicator indicating that the provisioning using the control plane is used. If the notification is received by the PS, the PS may prepare in advance the credentials of SO-SNPN to be forwarded to the corresponding UE.

In operation 709, the DCS may transmit an EAP response message to the AUSF. The EAP response message may include an authentication success message (EAP Success), Onboarding SUPI indicating a UE, a keying material for generating a key to be used for communication with a UE in the ON-SNPN, and an indicator indicating that the provisioning using the control plane is to be performed.

In operation 710, the AUSF may generate K_ausf based on the keying material in the EAP response message received in operation 709.

In operation 711, the AUSF may transmit an EAP response message to the AMF/SEAF. The EAP response message transmitted to the AMF/SEAF may include an authentication success message, K_seaf generated from K_ausf, an onboarding SUPI, and an indicator indicating that the provisioning using the control plane is performed.

In operation 712, the AMF/SEAF may transmit the EAP response message to the UE. The EAP response message transmitted to the UE may include an authentication success message (EAP success), a 5G key set identifier (ngKSI) indicating a key, an ABBA parameter, and an indicator indicating that the provisioning using the control plane is performed.

In operation 713, the UE may generate K_ausf by using a method corresponding to a method in which the AUSF has generated K_ausf in operation 710. In addition, the UE may generate an ephemeral key pair based on the indicator, received in operation 712, indicating that the provisioning using the control plane is performed. The ephemeral key pair may be configured by an ephemeral public key of UE (ePK.UE) and an ephemeral private key of UE (eSK.UE). The UE may store the eSK.UE and prepare to deliver the ePK.UE. The UE may obtain the EMSK using the same method at that of obtaining the EMSK by the DCS in operation 707, and may use the EMSK directly or use this keying material to perform integrity protection for the ePK.UE generated by the UE.

In operation 714, the AMF/SEAF may transmit a NAS Security Mode Command message to the UE for key sharing with the UE.

In operation 715, the UE may also transmit, to the AMF/SEAF, the NAS Security Mode Complete message for key sharing. The message may include ePK.UE and the MAC value obtained by performing integrity protection on the ePK.UE by using the EMSK or a key utilizing the EMSK.

In operation 716, the AMF/SEAF may know that the UE has successfully completed a process of onboarding on the ON-SNPN, and may prepare to notify of the same.

In operation 717, the AMF/SEAF may transmit an authentication notification message to the AUSF. The authentication notification message may include information indicating that the UE has successfully completed the onboarding process, a UE ID, and/or the ePK.UE received in operation 715 and the MAC value obtained by performing integrity protection on the ePK.UE by using the EMSK or a key utilizing the EMSK.

In operation 718, the AUSF may transmit the authentication notification message to the DCS. The authentication notification message transmitted to the DCS may include a UE ID, the address of a UDM to be used in a UPU process, and/or ePK.UE and the MAC value obtained by performing integrity protection on the ePK.UE by using the EMSK or a key utilizing the EMSK.

In operation 719, the DCS may find the address of the PS provided by the second pre-configuration that matches the UE ID received in operation 718. The DCS may verify the MAC value, received in operation 718, by using the EMSK stored in operation 707.

In operation 720, the DCS may transmit the authentication notification message to the PS. The authentication notification message transmitted to the PS may include a UE ID, ePK.UE and an indicator indicating that the provisioning using the control plane is to be used if operation 708 has not been performed.

In operation 721, the PS may match the UE ID received in operation 720 with the UE ID provided by the third pre-configuration to find the credentials of SO-SNPN to be provided to the corresponding UE. The PS may generate its own ephemeral key pairs (ePK.PS, eSK.PS) based on the indicator provided by the DCS, and generate ephemeral session keys by using the ePK.UE and eSK.PS. The ephemeral session keys may be configured by a key to be used for encryption (ephemeral encryption key) and a key to be used for integrity protection (ephemeral MAC key). The PS may obtain a value (cipher-text value) by encrypting the credentials of SO-SNPN to be delivered to the corresponding UE with an ephemeral encryption key, and may calculate a value (MAC-tag value) by hashing the cipher-text value using a MAC key. The encrypted and integrity-protected SO-SNPN credentials may be configured by a Cipher-text value and a MAC-tag value.

In operation 722, the PS may transmit a provisioning request message to the DCS. The message may include a UE ID, ePK.PS, and/or encrypted and integrity-protected SO-SNPN credentials.

In operation 723, the DCS may prepare to deliver the provisioning request message to the UDM. The DCS may perform integrity protection on the ePK.PS received in operation 722, by utilizing the EMSK stored in operation 707, to calculate the MAC value. The DCS or PS may replace the functional role of the UDM described later.

In operation 724, the DCS may transmit the provisioning request message to the UDM. The message may include information received from the PS in operation 722 and the MAC value obtained by performing integrity protection on the ePK.PS in operation 723.

In operation 725, the UDM may request a Nausf_UPUProtection service to perform a UPU process. The corresponding message (e.g., a Nausf_UPUProtection request message) may include Onboarding SUPI and encrypted and integrity-protected SO-SNPN credentials.

In operation 726, the encrypted and integrity-protected SO-SNPN credentials may be integrity-protected by the AUSF using K_ausf.

In operation 727, the AUSF may transfer a value of UPU-MAC-I_ausf and a value of Counter_upu calculated in operation 726 to the UDM through Nausf_UPUProtection Response. Counter_upu is a value that starts from 0x00 0x00 and increases each time UPU-MAC-I_ausf is calculated, and may prevent replay attacks.

In operation 728, the UDM may transmit, to the AMF/SEAF through Nudm_SDM_Notification service, UPD data, a value of UPU-MAC-I_ausf and a value of Counter_upu calculated by the AUSF in operation 726, and/or the ePK.PS and MAC value received in operation 724.

In operation 729, the AMF/SEAF may transmit a DL NAS Transport to the UE. The DL NAS transport message may include UPU data, UPU-MAC-I_ausf, Counter_upu, and the ePK.PS and MAC value received in operation 728.

In operation 730, the UE may verify UPU-MAC-I_ausf by using K_ausf. Additionally, the UE may verify the MAC value received in operation 729 by using the EMSK. The UE may generate ephemeral session keys by using eSK.UE and ePK.PS. Ephemeral session keys may be configured by a key to be used for encryption (ephemeral encryption key) and a key to be used for integrity protection (ephemeral MAC key). These keys may be the same as the keys generated by the PS in operation 721. The UE may authenticate the MAC-tag value by using the ephemeral MAC key and obtain SO-SNPN credentials from the cipher-text value by using the ephemeral encryption key.

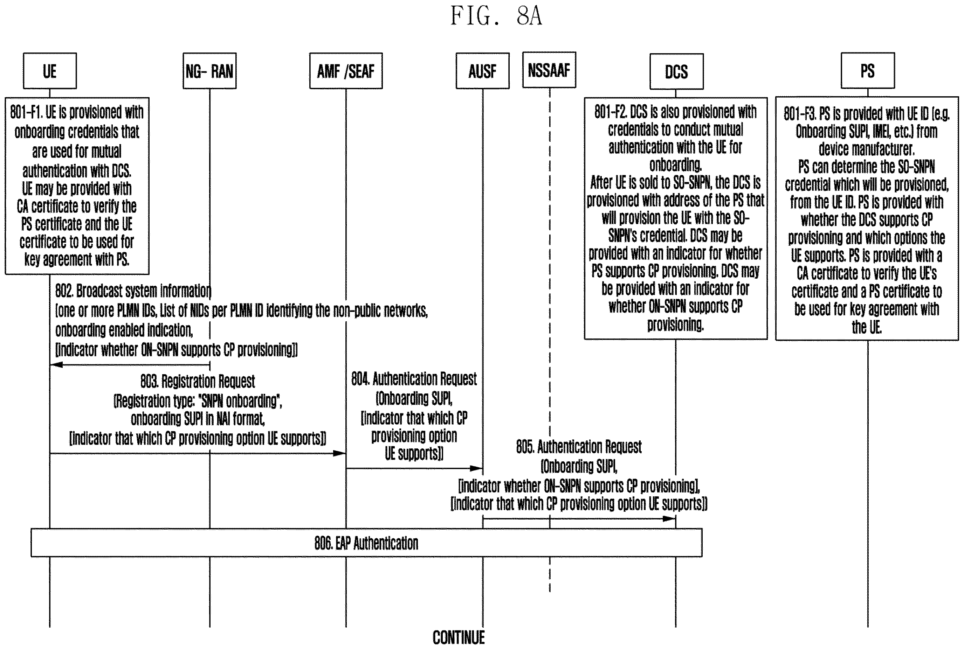

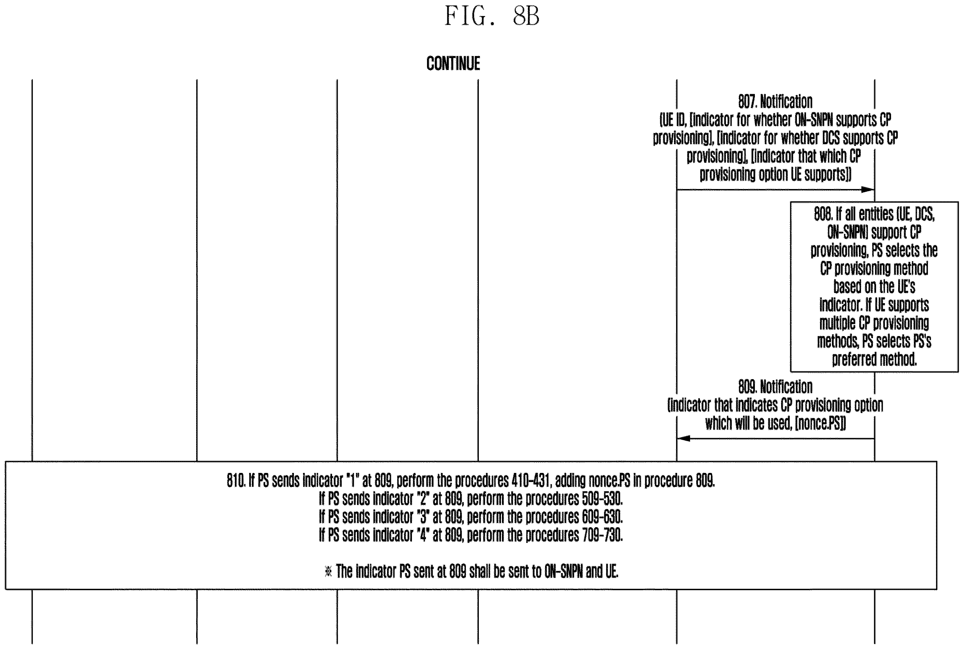

FIGS. 8A and 8B are flowcharts illustrating an example of a method in which a UE accesses an ON-SNPN, performs mutual authentication, and then securely receives provisioning of SO-SNPN credentials from a PS, according to an embodiment of the disclosure.

The signaling order of FIGS. 8A and 8B may be changed according to circumstances. In addition, some of the operations of FIGS. 8A and 8B may be omitted depending on circumstances, or two or more operations may be combined and performed as one operation.

For the procedures shown in FIGS. 8A and 8B, one or more of the following configurations may be performed in advance.

### 801-F1: First pre-configuration

A UE manufacturer may provision the UE with credentials to be used for mutual authentication with a DCS when manufacturing a UE. The UE may have a CA certificate to authenticate a certificate of the PS and a certificate of the UE itself.

### 802-F2: Second pre-configuration

For the purpose of onboarding, a UE manufacturer may provision a DCS with credentials to be used for mutual authentication with UEs accessing the ON-SNPN. After the UE is sold to the SO-SNPN owner, the UE manufacturer may provision the DCS with the address of a PS, by which credentials of the SO-SNPN can be provisioned to the UE. When provisioning using a control plane is performed, the address of the PS may be used when the DCS searches for the PS to trigger provisioning on the PS. The DCS may be provided with information about whether the PS, ON-SNPN and UE support provisioning using a control plane.

### 801-F3: Third pre-configuration

The UE manufacturer may provide the PS with the ID (e.g., Onboarding SUPI, IMEI, etc.) of the UE sold to the owner of the SO-SNPN. The PS stores the UE ID and may later use the UE ID to find SO-SNPN credentials to be provided to a UE having the corresponding UE ID. The PS may have a CA certificate to authenticate a certificate of the UE and a certificate of the PS itself. The PS may receive information about whether the DCS and the UE support provisioning using a control plane from the UE manufacturer.

Referring to FIGS. 8A to 8E, in operations 801-F1, 801-F2, and 801-F3, a first pre-configuration (801-F1), a second pre-configuration (801-F2), and a third pre-configuration (801-F3) may be performed. The first pre-configuration, the second pre-configuration, and the third pre-configuration may be simultaneously performed, or the three pre-configurations may be sequentially performed instead of being performed simultaneously. If performed sequentially, the order may not be fixed.

The first pre-configuration and/or the second pre-configuration may include a process required for, when a UE accesses an ON-SNPN that does not have subscription information of the UE, successful authentication with the help of a DCS capable of authenticating the UE (a process in which the UE and the DCS are pre-provisioned with credentials), and a process required for the UE to subsequently successfully obtain the SO-SNPN credentials from the PS (a process of storing the address of the PS in the DCS). The first pre-configuration and/or the third pre-configuration may include a process of configuring certificates required for signing when the UE and PS transmit information to generate ephemeral public keys (configuring a UE certificate/CA certificate and a PS certificate/CA certificate in the UE and PS, respectively). Through the second pre-configuration, the DCS may be previously provided with an indicator about whether the PS, ON-SNPN, or UE support provisioning using a control plane or, if not, may be provided with the indicator through the registration process. Through the third pre-configuration, the PS may be previously provided with an indicator about whether the DCS or UE supports provisioning using a control plane from the UE manufacturer, or may be provided later from another entity.

In operation 802, a NG-RAN may broadcast broadcast system information. The UE may receive broadcast system information. The broadcast system information may include one or more PLMN identifiers (IDs), network IDs for each PLMN ID, and an onboarding enabled indication. A combination of a PLMN ID and a network ID may indicate NPN. The NG-RAN may provide the UE with an indicator about whether the ON-SNPN supports provisioning using a control plane.

In operation 803, the UE may select an ON-SNPN based on the broadcasting system information received from the NG-RAN and transmit a registration request message to an AMF/SEAF. For example, transmission of the registration request message may be triggered when a power-on event occurs in the UE or there is a user's input. The registration request message may include a registration type and an Onboarding SUCI. The registration type may include "SNPN Onboarding" indicating that the UE does not have subscription information for the corresponding NPN. For example, the Onboarding SUCI may have the format such as "username@realm". Here, the realm part may represent a DCS. The UE may also include, in a registration request message, an indicator indicating an option the UE supports during provisioning using a control plane and transmits the same. The UE may support a method regarding one or more of multiple options. Alternatively, the UE may not support provisioning using a control plane. In this case, the corresponding indicator may have no value or may indicate, for example, a value of zero.

In operation 804, the AMF/SEAF may receive a registration request message from the UE and identify the Onboarding SUCI included in the received registration request message. In addition, the AMF/SEAF may identify the DCS based on the realm part of the onboarding SUCI and transmit an authentication request message (Authentication Request) to the AUSF capable of communicating with the identified DCS. The corresponding message may include an indicator, received in operation 803, indicating an option the UE supports during provisioning using a control plane.

In operation 805, the AUSF may transmit an authentication request message to the DCS based on the authentication request message. The authentication request message transmitted to the DCS may include information included in the authentication request message, which has been received by the AUSF from the AMF in operation 804. Additionally, the authentication request message may include an indicator about whether the ON-SNPN supports provisioning using a control plane. In case that the DCS is an AAA server, the AUSF may transmit an authentication request message to the DCS through an NSSAAF for protocol conversion. The ON-SNPN and DCS may be in a contractual relationship. In addition, when the DCS exists outside the domain of the ON-SNPN, the exchange of messages between the ON-SNPN and the DCS may be performed through the NEF. Alternatively, the AUSF may replace the functional role of DCS in the authentication process.

In operation 806, the UE and the DCS may perform EAP authentication (e.g., EAP-TLS).

In operation 807, the DCS may transmit a notification to the PS based on the result of operation 806. The corresponding message may include a UE ID, and may also include indicators received in operation 805 or provided by the second pre-configuration (e.g., an indicator about whether the ON-SNPN supports provisioning using a control plane, an indicator about whether the DCS supports provisioning using a control plane, an indicator about an option the UE supports during provisioning using a control plane, and the like).

In operation 808, the PS may determine to provide the credentials of SO-SNPN to the UE by using a control plane when the indicators received in operation 807 or the indicators provided by the third pre-configuration indicate that all of the UE/ON-SNPN/DCS/PS support a control plane and the PS prefers an option supported by the UE. When there are multiple options supported by the UE, the PS may select and deliver the option it prefers. If at least one entity among the UE/ON-SNPN/DCS/PS indicates that they do not support provisioning using a control plane, or if the PS prefers provisioning using a user plane, the PS may configure the indicator to be a specific value (e.g., "0") and then transmit the same in operation 809.

In operation 809, the PS may transmit an indicator indicating an option selected by the PS during provisioning using a control plane. If the option selected by the PS requires a nonce value generated by the PS, the PS may include the nonce value generated by the PS in the indicator and transmit the same in this operation.

In operation 810, when the indicator received by the DCS in operation 809 is "0", operations 310 to 318 of FIGS. 3A to 3C may be performed. When the indicator is "1", operations 410 to 431 of FIGS. 4A to 4E may be performed. When the indicator is "2", operations 509 to 530 of FIGS. 5A to 5E may be performed. When the indicator is "3", operations 609 to 630 of FIGS. 6A to 6E may be performed. When the indicator is "4", operations 709 to 730 of FIGS. 7A to 7E may be performed.

According to various embodiments of the disclosure, after successfully accessing the ON-SNPN, the UE may use the network entity of the ON-SNPN when receiving credentials of the SO-SNPN from the PS using the control plane. When credential is provisioned to the UE by using the existing UPU process as it is, information of the credentials provided by the PS may be exposed to the ON-SNPN network entity. To prevent the risk of being exposed to entities other than the UE and PS, the UE and PS each generate ephemeral key pairs, share each other's ephemeral public keys, and then generate ephemeral session keys by using the other's ephemeral public key and their own ephemeral private key. The PS may encrypt the SO-SNPN credentials and performs integrity protection thereon, by using the generated ephemeral session keys, and deliver the same using a control plane. The ON-SNPN may deliver the encrypted and integrity-protected credential information to the UE, by using the control plane. The UE may acquire the credentials of SO-SNPN, by using the ephemeral session keys.

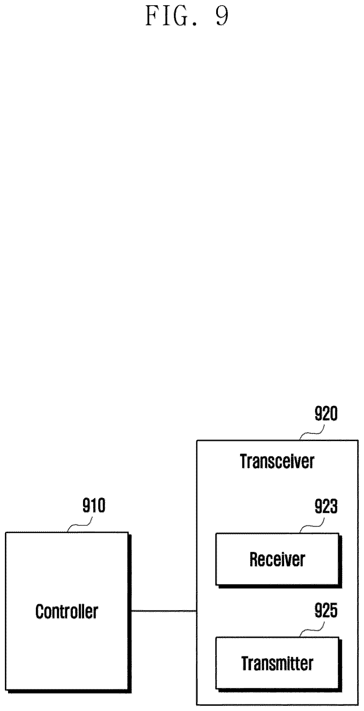

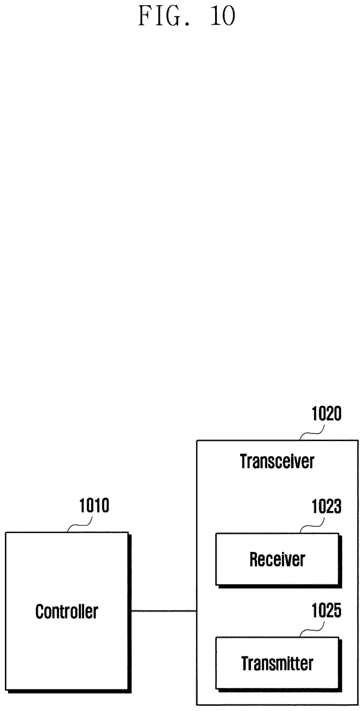

The operations of FIGS. 3A to 8B described above may be performed by a terminal and a network entity of FIGS. 9 and 10 described later.

FIG. 9 is a block diagram of a terminal according to an embodiment of the disclosure.

Referring to FIG. 9, a terminal may include a transceiver 920 and a controller 910 that controls overall operations of the terminal. The transceiver 920 may include a transmitter 925 and a receiver 923.

The transceiver 920 may transmit and receive signals to and from other network entities (e.g., an initial AMF or a base station).

The controller 910 may control the terminal to perform any one operation among the various embodiments described above. The controller 910 and the transceiver 920 do not necessarily have to be implemented as separate modules, but may be implemented as a single element, such as in the form of a single chip. The controller 910 and the transceiver 920 may be electrically connected. In an embodiment, the controller 910 may be a circuit, an application-specific circuit, or at least one processor. In addition, operations of the terminal may be realized by including a memory device storing corresponding program codes in an element (e.g., the controller 910 and/or other elements not shown) in the terminal.

FIG. 10 is a block diagram of a network entity according to an embodiment of the disclosure. The network entity shown in FIG. 10 may include at least one NF (e.g., a base station, an initial AMF, a target AMF, an existing AMF, NSSF, NRF, SMF, UPF, AF, NEF, PCF, DN or UDM, etc.) depending on system implementation.

Referring to FIG. 10, a network entity may include a transceiver 1020 and a controller 1010 that controls overall operations of the network entity. The transceiver 1020 may include a transmitter 1025 and a receiver 1023.

The transceiver 1020 may transmit and receive signals to and from a terminal or other network entities.

The controller 1010 may control a network entity to perform any one operation of the above-described embodiments. The controller 1010 and the transceiver 1020 do not necessarily have to be implemented as separate modules, but may be implemented as a single element, such as in the form of a single chip. The controller 1010 and the transceiver 1020 may be electrically connected. In an embodiment, the controller 1010 may be a circuit, an application-specific circuit, or at least one processor. In addition, operations of the network entity may be realized by including a memory device storing corresponding program codes in an element (e.g., the controller 1010 and/or other elements not shown) in the network entity.

It should be noted that the above-described configuration diagrams, illustrative diagrams of control/data signal transmission methods, and illustrative diagrams of operation procedures as illustrated in FIG. 1 to FIG. 10 are not intended to limit the scope of protection of the disclosure. That is, all the constituent elements, entities, or operation steps shown and described in FIG. 1 to FIG. 10 should not be construed as being essential elements for the implementation of the disclosure, and even when including only some of the elements, the disclosure may be implemented without impairing the true of the disclosure.

The above-described operations of the embodiments may be implemented by providing any unit of a device with a memory device storing corresponding program codes. That is, a controller in the device may perform the above-described operations by reading and executing the program codes stored in the memory device by means of a processor or central processing unit (CPU).

Various units or modules of an entity or terminal device set forth herein may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
acquiring configuration information including a certificate of the terminal and a certificate authority (CA) certificate associated with a certificate of a provisioning server;
identifying that provisioning using a control plane is performed;
generating an ephemeral key pair based on the identification; and
based on the configuration information and the ephemeral key pair, acquiring credentials of a subscription owner-standalone non-public network (SO-SNPN) in the control plane.

2. The method of claim 1, further comprising:
receiving broadcast system information,
wherein the broadcast system information includes an indicator about whether an onboarding-standalone non-public network (ON-SNPN) supports the provisioning using the control plane.

3. The method of claim 2, further comprising:
selecting the ON-SNPN based on the broadcast system information; and
transmitting a request message for registration with the ON-SNPN,
wherein the request message includes an indicator indicating whether the terminal supports the provisioning using the control plane.

4. The method of claim 1, further comprising:
acquiring an indicator indicating that the provisioning using the control plane is performed and a nonce value generated by the provisioning server; and
signing the nonce value with a private key corresponding to the certificate of the terminal and transmitting the signed nonce value.

5. The method of claim 1, wherein the ephemeral key pair comprises an ephemeral public key of the terminal and an ephemeral private key of the terminal, and
wherein the configuration information further includes credentials to be used for mutual authentication with a default credentials server (DCS).

6. The method of claim 1, wherein the acquiring of the credentials of the SO-SNPN comprises:
verifying the certificate of the provisioning server based on the CA certificate;
generating a first ephemeral key for encryption and a second ephemeral key for integrity protection, based on an ephemeral private key of the terminal and an ephemeral public key of the provisioning server; and
acquiring the credentials of the SO-SNPN based on the first ephemeral key and the second ephemeral key.

7. A method performed by a provisioning server in a wireless communication system, the method comprising:
acquiring configuration information including a certificate of the provisioning server and a certificate authority (CA) certificate associated with a certificate of a terminal;
identifying that provisioning using a control plane is performed;
generating an ephemeral key pair for the provisioning using the control plane; and
based on the configuration information and the ephemeral key pair, generating credentials of a subscription owner-standalone non-public network (SO-SNPN) to be transferred in the control plane.

8. The method of claim 7, wherein the configuration information further includes information about whether a default credentials server (DCS) supports the provisioning using the control plane and information about whether the terminal supports the provisioning using the control plane.

9. The method of claim 7, further comprising:
receiving a notification message;
wherein the notification message includes at least one indicator among an indicator about whether an onboarding-standalone non-public network (ON-SNPN) supports the provisioning using the control plane, an indicator about whether the terminal supports the provisioning using the control plane, or an indicator about whether a default credentials server (DCS) supports the provisioning using the control plane.

10. The method of claim 9, wherein the identifying that the provisioning using the control plane is performed comprises, in case that the terminal, the ON-SNPN, the DCS, and the provisioning server all support the provisioning using the control plane, based on at least one of the configuration information or the notification message, determining to provide the credentials of the SO-SNPN to the terminal by using the control plane.

11. The method of claim 7, further comprising:
transmitting an indicator indicating that the provisioning using the control plane is performed and a nonce value generated by the provisioning server; and
receiving a value obtained by signing the nonce value with a private key corresponding to the certificate of the terminal.

12. The method of claim 11, further comprising:
receiving the certificate of the terminal and an identifier of the terminal;
finding the credentials of the SO-SNPN by matching the received identifier of the terminal to an identifier of the terminal included in the configuration information;
verifying the received certificate of the terminal based on the CA certificate; and
generating a first ephemeral key for encryption and a second ephemeral key for integrity protection, based on an ephemeral public key of the terminal and an ephemeral private key of the provisioning server,
wherein the credentials of the SO-SNPN are configured by an encrypted value based on the first ephemeral key and an integrity-protected value obtained by hashing the encrypted value based on the second ephemeral key.

13. The method of claim 12, further comprising transmitting the credentials of SO-SNPN configured by the encrypted value and the integrity-protected value in the control plane.

14. A terminal in a wireless communication system, the terminal comprising:
a transceiver; and
a controller functionally connected to the transceiver,
wherein the controller is configured to:
acquire configuration information including a certificate of the terminal and a certificate authority (CA) certificate associated with a certificate of a provisioning server;
identify that the provisioning using a control plane is performed;
generate an ephemeral key pair based on the identification; and
based on the configuration information and the ephemeral key pair, acquire credentials of a subscription owner-standalone non-public network (SO-SNPN) in the control plane.

15. A provisioning server in a wireless communication system, the provisioning server comprising:
a transceiver; and
a controller functionally connected to the transceiver,
wherein the controller is configured to:
acquire configuration information including a certificate of the provisioning server and a certificate authority (CA) certificate associated with a certificate of a terminal;
identify that provisioning using a control plane is performed;
generate an ephemeral key pair for the provisioning using the control plane; and
based on the configuration information and the ephemeral key pair, generate credentials of a subscription owner-standalone non-public network (SO-SNPN) to be transferred in the control plane.
